(19)

Europäisches Patentamt
European Patent Office
Office européen des brevets

(11) **EP 3 367 688 A1**

(12) **EUROPEAN PATENT APPLICATION**
published in accordance with Art. 153(4) EPC

(43) Date of publication:
**29.08.2018 Bulletin 2018/35**

(21) Application number: **16857174.3**

(22) Date of filing: **24.08.2016**

(51) Int Cl.:
**H04N 19/593** (2014.01)  **H04N 19/105** (2014.01)
**H04N 19/167** (2014.01)  **H04N 19/182** (2014.01)

(86) International application number:
**PCT/JP2016/074695**

(87) International publication number:
**WO 2017/068856 (27.04.2017 Gazette 2017/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.10.2015 JP 2015207191**

(71) Applicant: **Sharp Kabushiki Kaisha**
**Sakai City, Osaka 590-8522 (JP)**

(72) Inventors:
• **IKAI, Tomohiro**
  **Sakay City, Osaka 590-8522 (JP)**
• **TSUKUBA, Takeshi**
  **Sakay City, Osaka 590-8522 (JP)**
• **YAMAMOTO, Tomoyuki**
  **Sakay City, Osaka 590-8522 (JP)**

(74) Representative: **Müller Hoffmann & Partner**
**Patentanwälte mbB**
**St.-Martin-Strasse 58**
**81541 München (DE)**

(54) **PREDICTIVE IMAGE GENERATION DEVICE, IMAGE DECODING DEVICE, AND IMAGE ENCODING DEVICE**

(57)    A predicted image is generated by means of a method with which it is easy for parallel processing for a plurality of pixels to be executed, in a case where each pixel of the predicted image is derived according to a distance from a reference region and with reference to an unfiltered reference pixel. A predicted pixel value constituting the predicted image is derived by applying weighted sum in which a weighting coefficient is used with respect to a filtered predicted pixel value in a target pixel within a prediction block, and at least one or more unfiltered reference pixel values, and the weighting coefficient for the unfiltered reference pixel values is derived as a product of a reference intensity coefficient that is determined according to a prediction direction indicated by a prediction mode, and a distance weighting that monotonically decreases according to an increase in a reference distance for the target pixel.

FIG. 1

PREDICTED PIXEL VALUE CORRECTION PROCESSING START

SET REFERENCE INTENSITY COEFFICIENT ACCORDING TO PREDICTION DIRECTION — S21

CALCULATE DISTANCE WEIGHTING k ACCORDING TO DISTANCE BETWEEN TARGET PIXEL AND REFERENCE REGION — S22

SET PRODUCT OF REFERENCE INTENSITY COEFFICIENT AND DISTANCE WEIGHTING AS WEIGHTING COEFFICIENT — S23

CALCULATE PRODUCT OF WEIGHTING COEFFICIENT AND UNFILTERED REFERENCE PIXEL VALUE — S24

CALCULATE WEIGHTING COEFFICIENT b[x, y] — S25

CALCULATE PRODUCT OF FILTERED PREDICTED PIXEL VALUE AND WEIGHTING COEFFICIENT b[x, y] — S26

ADD PRODUCT OF S24 AND PRODUCT OF S26 — S27

NORMALIZE ADDED VALUE OF S27 BY MEANS OF RIGHT SHIFT OPERATION — S28

END

EP 3 367 688 A1

**Description**

Technical Field

The present invention relates to a predicted image generation device that generates a predicted image of a partial region of an image using an image of a peripheral region for the main purposes of image coding and image restoration, an image decoding device that decodes coded data using a predicted image, and an image coding device that generates coded data by coding an image using a predicted image.

Background Art

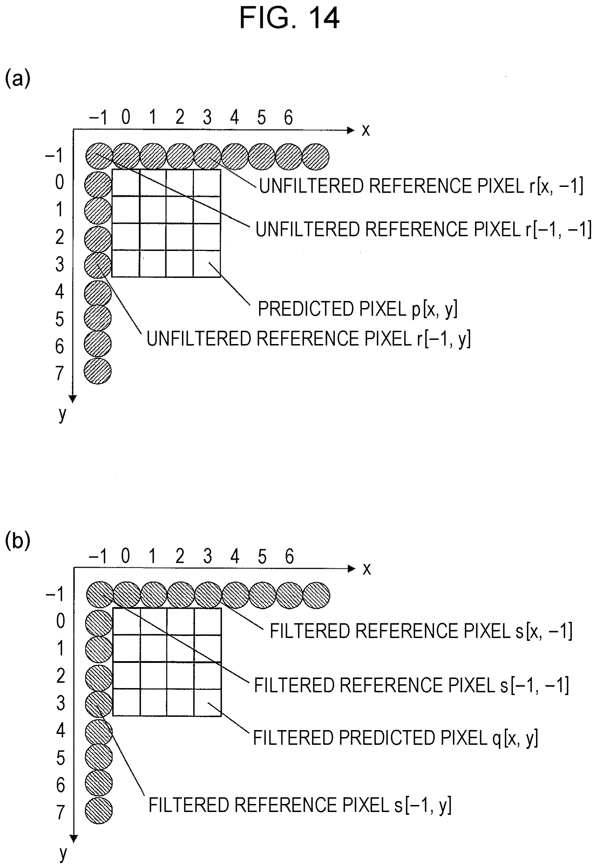

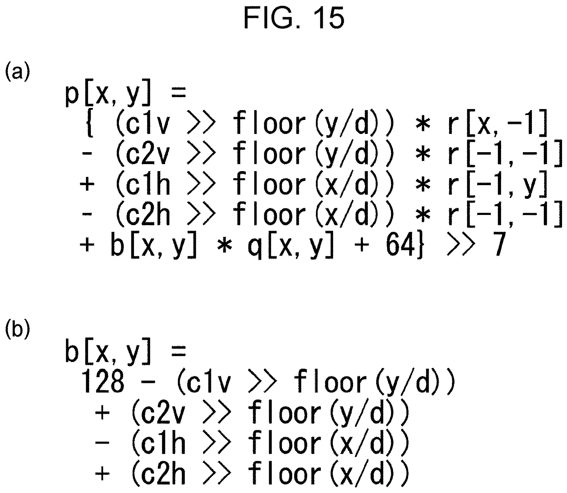

A video image coding device that generates coded data by coding a video image, and a video image decoding device that generates a decoded image by decoding the coded data are used to efficiently transmit or record a video image.
As a specific video image coding method, there is a method (NPL 1) that is adopted in HEVC (High-Efficiency Video Coding), for example.
In HEVC, a predicted image is generated based on a local decoded image that is obtained by an input image being coded and decoded, and a prediction residual (also called a "difference image" or a "residual image") that is obtained by subtracting the predicted image from the input image (original image) is coded; as a result, the input image can be expressed by means of coded data for which the amount of coding is less compared to a case where the input image is coded directly. As methods for generating a predicted image, there are inter-frame prediction (inter-prediction) and intra-frame prediction (intra-prediction). In the intra-frame prediction of HEVC, a region that is proximate to a target region is set as a reference region, and a predicted image is generated based on the values of decoded pixels (reference pixels) in the reference region. There is a case where reference pixels are used directly as unfiltered reference pixels, and there is a case where values obtained by a low pass filter being applied among proximate reference pixels are used as filtered reference pixels.
Furthermore, as another method for intra-frame prediction, a method (NPL 2) is disclosed in which predicted pixel values obtained by means of intra-frame prediction using filtered reference pixels are corrected based on unfiltered reference pixels in a reference region. In weighting for the aforementioned, the predicted pixel values are corrected based on a distance weighting obtained by shifting a predefined reference pixel intensity coefficient to the right on the basis of a position within a prediction target region (prediction block) of correction target pixels. The accuracy of a predicted image in the vicinity of a boundary of a prediction block can be improved by means of this correction, and therefore the amount of coding for coded data can be reduced.
Details of the method of NPL 2 will be described with reference to Fig. 14 and Fig. 15. Fig. 14 is a drawing depicting the positional relationship between a predicted pixel in a prediction block in intra-frame prediction, and reference pixels in a reference region that has been set with respect to the prediction block. Fig. 14(a) depicts the respective positions of a predicted pixel value p[x, y] in position (x, y) within a prediction block, an unfiltered reference pixel value r[x, -1] that is in position (x, -1) in a reference region adjacent to the upper edge of the prediction block and is a pixel above the position (x, y), a pixel value r[-1, y] of an unfiltered reference pixel (unfiltered reference pixel value r[-1, y]) that is in position (-1, y) in the reference region adjacent to the left edge of the prediction block and is a pixel to the left of the position (x, y), and an unfiltered reference pixel r[-1, -1] that is in position (-1, -1) in the reference region adjacent to the upper-left of the prediction block. Similarly, Fig. 14(b) depicts a predicted pixel value q[x, y] (filtered predicted pixel value q[x, y]) according to a filtered reference pixel value at position (x, y), a filtered reference pixel value s[x, -1] at position (x, -1), a filtered reference pixel value s[-1, y] at position (-1, y), and a filtered reference pixel value s[-1, -1] at position (-1, -1).
Fig. 15(a) depicts a formula for deriving the predicted pixel value p[x, y]. The predicted pixel value p[x, y] is derived by carrying out weighted sum of the filtered predicted pixel value q[x, y] and the unfiltered reference pixel values r[x, -1], r[-1, y], and r[-1, -1]. Values obtained by shifting predefined reference intensity coefficients (c1v, c2v, c1h, and c2h) to the right on the basis of the position (x, y) are used as weighting coefficients. For example, the weighting coefficient for the unfiltered reference pixel value r[x, -1] is c1v >> floor(y / d). Here, floor() is a floor function, d is a predefined parameter corresponding to the prediction block size, and "y / d" represents the division of y by d (rounded down to the nearest decimal). A weighting coefficient for an unfiltered reference pixel value can be expressed as a value obtained by adjusting a corresponding reference intensity coefficient by means of a weighting (distance weighting) that corresponds to a reference distance. Furthermore, b[x, y] is a weighting coefficient for the filtered predicted pixel value q[x, y], and is derived by means of the formula depicted in Fig. 15(b). b[x, y] is set in such a way that the sum total of the weighting coefficients coincides with the denominator used during the weighted sum (corresponds to ">> 7", namely 128, in the formula of Fig. 15(a)). According to the formula of Fig. 15(a), the value of the weighting coefficient for an unfiltered reference pixel decreases as the values of x and y increase. In other words, there is a property that the weighting coefficient of an unfiltered reference pixel increases as the position within the prediction block becomes nearer to the reference region.

Citation List

Non Patent Literature

NPL 1: ITU-T Rec. H.265 (V2), published October 29, 2014)
NPL 2: "Position dependent prediction combination", ITU-T STUDY GROUP 16 COM16-C1046-E, (published September 2015)

Summary of Invention

Technical Problem

However, in NPL 2, in the calculation of a weighting coefficient, processing in which a reference intensity coefficient is shifted to the right in accordance with a reference distance (the distance between a prediction target pixel and the reference region) is necessary, and therefore there has been a problem in that it is difficult for predicted pixel values for a plurality of pixels to be derived by means of parallel processing by a parallel processing function (a vector calculation instruction, for example) of hardware or software. More specifically, in a case where predicted images for a plurality of pixels within a prediction block are generated by means of parallel processing, there has been a problem in that the reference distance is different for each pixel position, and therefore there are cases where a usable parallel processing function does not exist.

Solution to Problem

In order to solve the aforementioned problem, a predicted image generation device according to one aspect of the present invention is provided with: a filtered reference pixel setting unit that derives a filtered reference pixel value in a reference region that is set with respect to a prediction block; an intra-prediction unit that derives a filtered predicted pixel value of the prediction block with reference to the filtered reference pixel value in accordance with a prediction method corresponding to a prediction mode; and a predicted image correction unit that generates a predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

In order to solve the aforementioned problem, an image decoding device according to one aspect of the present invention is an image decoding device that restores an image from coded data by generating a predicted image with a prediction block serving as a unit in accordance with an intra-prediction method associated with a prediction mode, provided with: a filtered reference pixel setting unit that derives a filtered reference pixel value in a reference region that is set with respect to the prediction block; an intra-prediction unit that derives a filtered predicted pixel value of the prediction block with reference to the filtered reference pixel value in accordance with a prediction method corresponding to the prediction mode; and a predicted image correction unit that generates the predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

In order to solve the aforementioned problem, an image coding device according to one aspect of the present invention is an image coding device that generates coded data from a video image by generating a predicted image with a prediction block serving as a unit in accordance with an intra-prediction method associated with a prediction mode, provided with: a filtered reference pixel setting unit that derives a filtered reference pixel value in a reference region that is set with respect to the prediction block;

an intra-prediction unit that derives a filtered predicted pixel value of the prediction block with reference to the filtered reference pixel value in accordance with a prediction method corresponding to the prediction mode; and a predicted image correction unit that generates the predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

Advantageous Effects of Invention

A predicted image generation device according to one aspect of the present invention is provided with: a filtered reference pixel setting unit that derives a filtered reference pixel value in a reference region; an intra-prediction unit that derives a filtered predicted pixel value with reference to the filtered reference pixel value; and a predicted image correction unit that generates a predicted image by correcting the filtered predicted pixel value by means of predicted image correction processing in which reference is made to an unfiltered reference pixel value in the reference region, in which the predicted image correction unit derives a predicted pixel value by applying weighted sum in which a weighting coefficient is used with respect to the filtered predicted pixel value in a target pixel, and at least one or more unfiltered reference pixel values, and the weighting coefficient for the unfiltered reference pixel values is derived as a product of a reference intensity coefficient that is determined according to a prediction direction, and a distance weighting that monotonically decreases according to an increase in a reference distance. Therefore, in a case where a predicted image is generated by weighted sum of a filtered predicted pixel value and an unfiltered reference pixel value with reference to a weighting coefficient, an effect is demonstrated in that the weighting coefficient can be derived by means of the product of a reference distance-dependent parameter (distance weighting) with which parallel implementation is easier, without using a right shift according to the reference distance-dependent parameter.

Furthermore, in a case where an image decoding device (video image decoding device) and an image coding device (video image coding device) according to one aspect of the present invention are provided with a predicted image generation device corresponding to the aforementioned predicted image generation device, and carry out coding or decoding using a predicted image generated by weighted sum of a filtered predicted pixel value and an unfiltered reference pixel value with reference to a weighting coefficient, an effect is demonstrated in that the weighting coefficient can be derived by means of the product of a reference distance-dependent parameter (distance weighting) with which parallel implementation is easier, without using a right shift according to the reference distance-dependent parameter.

Brief Description of Drawings

[Fig. 1] Fig. 1 is a flow diagram depicting the operation of a predicted image correction unit 145 according to one embodiment of the present invention.

[Fig. 2] Fig. 2 is a functional block diagram depicting a schematic configuration of the aforementioned video image decoding device.

[Fig. 3] Fig. 3 is a drawing depicting a data configuration of coded data that is generated by a video image coding device according to one embodiment of the present invention and decoded by the video image decoding device, (a) to (d) being drawings respectively depicting a picture layer, a slice layer, a CTU layer, and a CU layer.

[Fig. 4] Fig. 4 is a drawing depicting prediction directions corresponding to prediction mode identifiers, with regard to 33 types of prediction modes belonging to directional prediction.

[Fig. 5] Fig. 5 is a functional block diagram depicting a schematic configuration of a predicted image generation unit according to one embodiment of the present invention.

[Fig. 6] Fig. 6 is a drawing for describing EQ1: the deriving of a predicted pixel value p[x, y] in a position (x, y) within a prediction block, in the predicted image correction unit 145, (a) depicting an example of a formula for deriving the predicted pixel value p[x, y], (b) depicting an example of a formula for deriving a weighting coefficient b[x, y], and (c) depicting an example of a formula for deriving a distance weighting k[·].

[Fig. 7] Fig. 7 is a flowchart depicting an overview of predicted image generation processing in CU units in the predicted image generation unit.

[Fig. 8] Fig. 8 is an example of EQ2: a formula for deriving a distance weighting k[·] that is set as 0 in a case where a reference distance is equal to or greater than a predetermined value.

[Fig. 9] Fig. 9 is a drawing depicting TBL_EQ2: the relationship between a reference distance and a weighting coefficient k[·] in cases where a first normalization adjustment term smax is different, (a), (b), and (c) respectively depicting the relationship between a reference distance and a weighting coefficient k[·] in cases where the value of a variable d indicating a block size is 1, 2, and 3.

[Fig. 10] Fig. 10 is a drawing for describing EQx: another example of the deriving of the predicted pixel value p[x, y] in a position (x, y) within a prediction block, (a) depicting an example of a formula for deriving the predicted pixel value p[x, y], (b) depicting an example of a formula for deriving the weighting coefficient b[x, y], and (c) depicting an example of a formula for deriving a distance shift value s[·].

[Fig. 11] Fig. 11 is a drawing depicting an example of EQ3a: a calculation formula for deriving a distance weighting k[x] by means of a left shift operation, (a) and (b) depicting formulas for deriving the distance weighting k[x] used in a case where d = 2, and (c) and (d) depicting formulas for deriving the distance weighting k[x] used in a case where d = 1.

[Fig. 12] Fig. 12 is a drawing depicting an example of EQ3b: a modified example of a calculation formula for deriving the distance weighting k[x] by means of a left shift operation.

[Fig. 13] Fig. 13 is a drawing depicting an example of TBL_EQ3: a distance weighting reference table for deriving the distance weighting k[·], (a) to (d) retaining the results of the distance weighting calculation formulas of Fig. 12(a) to (d).

[Fig. 14] Fig. 14 is a drawing depicting the positional relationship between a predicted pixel in a prediction block in intra-frame prediction in a conventional technique, and reference pixels in a reference region that has been set with respect to the prediction block, (a) depicting the case of unfiltered reference pixel values, and (b) depicting the case of filtered reference pixel values.

[Fig. 15] Fig. 15(a) depicts a formula for deriving the predicted pixel value p[x, y] according to a conventional technique, and (b) depicts a formula for deriving the weighting coefficient b[x, y] according to a conventional technique.

[Fig. 16] Fig. 16 is a functional block diagram depicting the configuration of a video image coding device according to one embodiment of the present invention.

[Fig. 17] Fig. 17 is a drawing depicting the configuration of a transmission device in which the aforementioned video image coding device is mounted, and a reception device in which the aforementioned video image decoding device is mounted, (a) depicting the transmission device in which the video image coding device is mounted, and (b) depicting the reception device in which the video image decoding device is mounted.

[Fig. 18] Fig. 18 is a drawing depicting the configuration of a recording device in which the aforementioned video image coding device is mounted, and a playback device in which the aforementioned video image decoding device is mounted, (a) depicting the recording device in which the video image coding device is mounted, and (b) depicting the playback device in which the video image decoding device is mounted.

Description of Embodiments

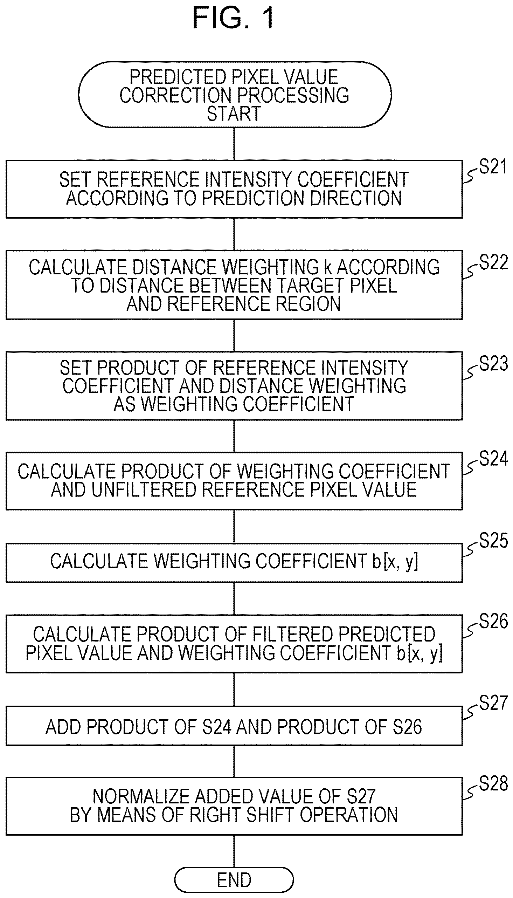

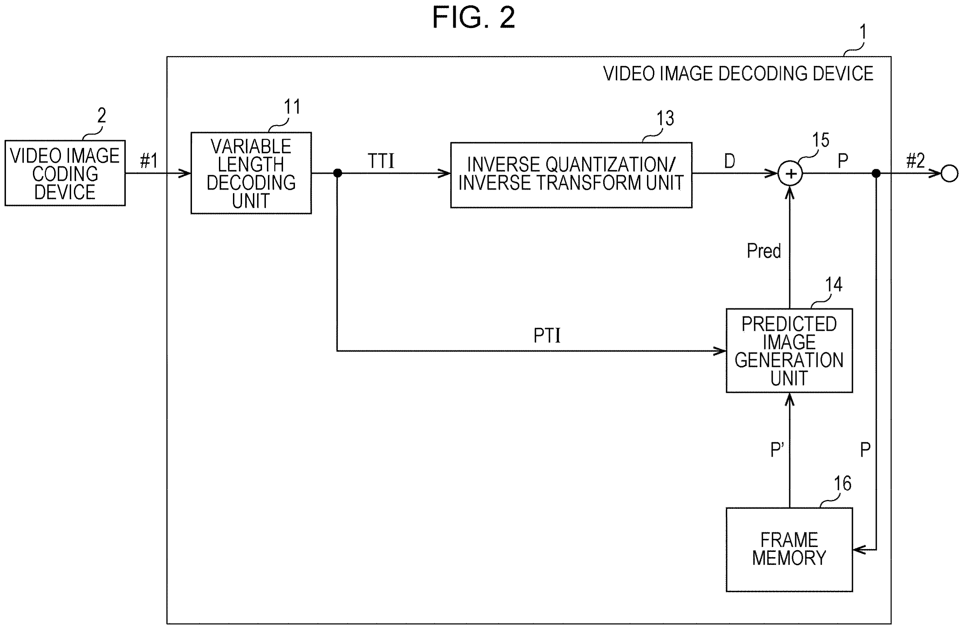

One embodiment of the present invention will be described with reference to Fig. 1 to Fig. 18. First, an overview of a video image decoding device (image decoding device) 1 and a video image coding device (image coding device) 2 will be described with reference to Fig. 2. Fig. 2 is a functional block diagram depicting a schematic configuration of the video image decoding device 1.

The video image decoding device 1 and the video image coding device 2 depicted in Fig. 2 implement technology adopted in the H.264/MPEG-4 AVC standard, technology adopted in the HEVC (High-Efficiency Video Coding) standard, and technology that is an improvement thereon.

The video image coding device 2 generates coded data #1 by carrying out entropy coding on syntax values stipulated as being transmitted from an encoder to a decoder in a specific video image coding method.

The coded data #1 obtained by the video image coding device 2 coding a video image is input to the video image decoding device 1. The video image decoding device 1 decodes the input coded data #1 and outputs a video image #2 to outside. The configuration of the coded data #1 will be described hereinafter, prior to a detailed description of the video image decoding device 1.

[Configuration of Coded Data]

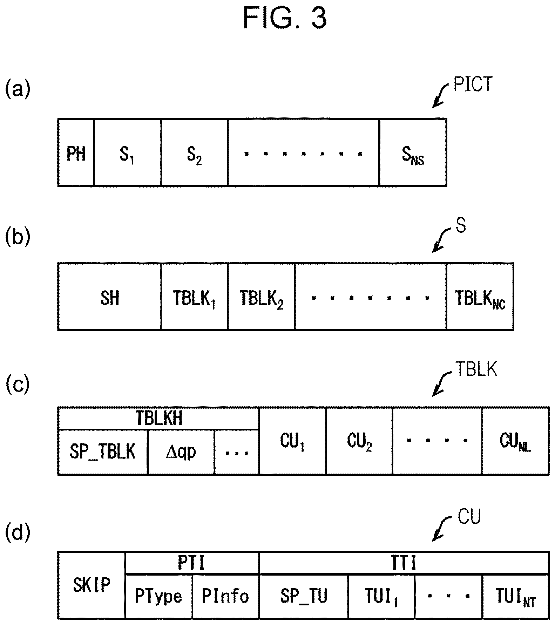

An example of the configuration of the coded data #1 that is generated by the video image coding device 2 and decoded by the video image decoding device 1 will be described using Fig. 3. The coded data #1, as an example, includes a sequence and partially coded data corresponding to a plurality of pictures constituting the sequence.

The hierarchical structure of the picture layer and thereunder in the coded data #1 is depicted in Fig. 3. Figs. 3(a) to (d) are drawings respectively depicting a picture layer stipulating a picture PICT, a slice layer stipulating a slice S, a tree block layer stipulating a tree block TBLK, and a CU layer stipulating a coding unit (CU) included in the tree block TBLK.

(Picture Layer)

A set of data that is referred to by the video image decoding device 1 in order to decode a processing-target picture PICT (hereinafter, also called a target picture) is stipulated in the picture layer. The picture PICT includes a picture header PH and slices S1 to SNS (NS is the total number of slices included in the picture PICT), as depicted in Fig. 3(a).

It should be noted that, hereinafter, the code subscript may not be written in a case where it is not necessary for each of the slices S1 to SNS to be differentiated. Furthermore, the same is also true for other data having subscript appended thereto, included in the coded data #1 described hereinafter.

The picture header PH includes a coding parameter group that is referred to by the video image decoding device 1 in order to decide upon a decoding method for the target picture. For example, a reference value (pic_init_qp_minus26) within a picture for a prediction residual quantization step is an example of a coding parameter included in the picture header PH.

It should be noted that the picture header PH is also called a picture parameter set (PPS).

(Slice Layer)

A set of data that is referred to by the video image decoding device 1 in order to decode a processing-target slice S (also called a target slice) is stipulated in the slice layer. The slice S includes a slice header SH and tree blocks TBLK1 to TBLKNC (NC is the total number of tree blocks included in the slice S), as depicted in Fig. 3(b).

The slice header SH includes a coding parameter group that is referred to by the video image decoding device 1 in order to decide upon a decoding method for the target slice. Slice type designation information (slice_type) that designates a slice type is an example of a coding parameter included in the slice header SH.

(1) An I slice for which only intra-prediction is used at the time of coding, (2) a P slice for which uni-directional prediction or intra-prediction is used at the time of coding, (3) a B slice type for which uni-directional prediction, bidirectional prediction, or intra-prediction is used at the time of coding, or the like can be cited as slice types that can be designated by the slice type designation information.

(Tree Block Layer)

A set of data that is referred to by the video image decoding device 1 in order to decode a processing-target tree block TBLK (hereinafter, also called a target tree block) is stipulated in the tree block layer.

The tree block TBLK includes a tree block header TBLKH and coding unit information CU1 to CUNL (NL is the total number of items of coding unit information included in the tree block TBLK). Here, first, the relationship between the tree block TBLK and the coding unit information CU is described below.

The tree block TBLK is divided into units for specifying intra-prediction or inter-prediction, and a block size for each item of transform processing. The division into each unit is expressed by recursive quadtree subdivision of the tree block TBLK. A tree structure obtained by this recursive quadtree subdivision is, hereinafter, called a coding tree.

Hereinafter, a unit that corresponds to a leaf, which is an end-node of a coding tree, is referred to as a coding node. Furthermore, a coding node is a basic unit for coding processing, and therefore, hereinafter, a coding node is also called a coding unit (CU).

That is, the coding unit information (hereinafter, called CU information) CU1 to CUNL is information corresponding to each coding node (coding unit) obtained by carrying out quadtree subdivision recursively on the tree block TBLK.

Furthermore, the root of the coding tree is associated with the tree block TBLK. In other words, the tree block TBLK is associated with the highest node of the quadtree subdivision tree structure in which a plurality of coding nodes are recursively included.

It should be noted that the size of each coding node is half the vertical and horizontal size of the coding node to which the coding node in question directly belongs (in other words, the unit of the node that is one level higher than the coding node in question).

Furthermore, the size that can be taken for each coding node is dependent on the size of the tree block and size designation information of the coding node, which is included in a sequence parameter set SPS of the coded data #1. The tree block is the root of a coding node, and therefore the maximum size of a coding node is the size of the tree block. The maximum size of the tree block coincides with the maximum size of the coding node (CU), and therefore there are cases where LCU (largest CU) and CTU (coding tree unit) are used as a name for a tree block. In general settings, size designation information for coding nodes in which the maximum coding node size is $64 \times 64$ pixels and the minimum coding node size is $8 \times 8$ pixels is used. In such a case, the size of a coding node and a coding unit CU is any of 64 × 64 pixels, 32 × 32 pixels, 16 × 16 pixels, or 8 × 8 pixels.

(Tree Block Header)

The tree block header TBLKH includes coding parameters that are referred to by the video image decoding device 1 in order to decide upon a decoding method for a target tree block. Specifically, as depicted in Fig. 3(c), tree block division information SP_TBLK that designates a division pattern into each CU for the target tree block, and a quantization parameter difference ∆qp (qp_delta) that designates the size of a quantization step are included.

The tree block division information SP_TBLK is information that represents a coding tree for dividing a tree block, and, specifically, is information that designates the shape, size, and position within the target tree block of each CU included in the target tree block.

It should be noted that the tree block division information SP_TBLK may not explicitly include the shape and size of a CU. For example, the tree block division information SP_TBLK may be a set of flags indicating whether or not an entire target tree block or a partial region of a tree block is to be divided into four parts. In such a case, the shape and size of each CU can be specified by jointly using the shape and size of a tree block.

(CU Layer)

A set of data that is referred to by the video image decoding device 1 in order to decode a processing-target CU (hereinafter, also called a target CU) is stipulated in the CU layer.

Here, the tree structure of the data included in the CU will be described prior to describing the specific content of the data included in the CU information CU. A coding node is a node of the root of a prediction tree (PT) and a transform tree (TT). A prediction tree and a transform tree are described below.

In a prediction tree, a coding node is divided into one or more prediction blocks, and the position and size of each prediction block is stipulated. In other words, a prediction block is one or more non-overlapping regions constituting a coding node. Furthermore, a prediction tree includes one or more prediction blocks obtained by means of the aforementioned division.

Prediction processing is carried out in each of these prediction blocks. Hereinafter, a prediction block, which is a unit for prediction, is also called a prediction unit (PU).

Generally speaking, there are two types of division in a prediction tree; the case of intra-prediction (intra-frame prediction) and the case of inter-prediction (inter-frame prediction).

In the case of intra-prediction, there are the division methods of 2N × 2N (the same size as a coding node) and N × N.

Furthermore, in the case of inter-prediction, there are the division methods of 2N × 2N (the same size as a coding node), 2N × N, N × 2N, N × N, and the like.

Furthermore, in a transform tree, a coding node is divided into one or more transform blocks, and the position and size of each transform block is stipulated. In other words, a transform block is one or more non-overlapping regions constituting a coding node. Furthermore, a transform tree includes one or more transform blocks that are obtained by means of the aforementioned division.

Transform processing is carried out in each of these transform blocks. Hereinafter, a transform block, which is a unit for a transform, is also called a transform unit (TU).

(Data Structure of CU Information)

Next, the specific content of the data included in the CU information CU will be described with reference to Fig. 3(d). As depicted in Fig. 3(d), the CU information CU, specifically, includes a skip flag SKIP, PT information PTI, and TT information TTI.

The skip flag SKIP is a flag that indicates whether or not a skip mode is being applied to a CU. In a case where the value of the skip flag SKIP indicates that a skip mode is applied to a target CU, the PT information PTI and the TT information TTI in that CU information CU are omitted. It should be noted that the skip flag SKIP is omitted in the I slice.

The PT information PTI is information relating to a PT included in a CU. In other words, the PT information PTI is a set of information relating to each prediction block included in a PT, and is referred to by the video image decoding device 1 when a predicted image is generated. The PT information PTI includes prediction type information PType and prediction information Pinfo, as depicted in Fig. 3(d).

The prediction type information PType is information that designates whether intra-prediction is to be used or whether inter-prediction is to be used as a predicted image generation method for a target PU.

The prediction information Pinfo is configured of intra-prediction information or inter-prediction information in accordance with which prediction method is designated by the prediction type information PType. Hereinafter, a prediction block in which intra-prediction is applied is also called an intra-prediction block, and a prediction block in which inter-prediction is applied is also called an inter-prediction block.

Furthermore, the prediction information Pinfo includes information designating the shape, size, and position of a prediction block. As mentioned above, the generation of the predicted image is carried out with prediction blocks serving as units. Details of the prediction information Pinfo will be described later on.

The TT information TTI is information relating to a TT included in a CU. In other words, the TT information TTI is a set of information relating to each of one or more TUs included in a TT, and is referred to by the video image decoding device 1 when residual data is decoded. It should be noted that, hereinafter, a TU is also called a transform block.

The TT information TTI includes TT division information SP_TU that designates a division pattern into each transform block for a target CU, and TU information TUI1 to TUINT (NT is the total number of transform blocks included in the target CU), as depicted in Fig. 3(d).

The TT division information SP_TU, specifically, is information for deciding the shape, size, and position within the target CU of each TU included in the target CU. For example, the TT division information SP_TU can be realized from information indicating whether or not the division of a target node is to be carried out (split_transform_unit_flag), and information indicating the depth of that division (trafoDepth).

Furthermore, for example, in a case where the size of a CU is $64 \times 64$, each TU obtained by division can take a size from $32 \times 32$ pixels to $4 \times 4$ pixels.

The TU information TUI1 to TUINT is individual information relating to each of one or more TUs included in a TT. For example, the TU information TUI includes a quantized prediction residual.

Each quantized prediction residual is coded data that is generated by the video image coding device 2 carrying out the following processing 1 to 3 on a target block, which is a processing-target block.

Processing 1: a DCT transform (discrete cosine transform) is carried out on a prediction residual obtained by subtracting a predicted image from a coding-target image;
Processing 2: a transform coefficient obtained in processing 1 is quantized;
Processing 3: variable length coding is carried out on the transform coefficient quantized in processing 2;

(Prediction Information Pinfo)

As mentioned above, there are two types of prediction information Pinfo; inter-prediction information and intra-prediction information.

The inter-prediction information includes coding parameters that are referred to by the video image decoding device 1 when an inter-predicted image is generated by means of inter-prediction. More specifically, the inter-prediction information includes inter-prediction block division information that designates a division pattern into each inter-prediction block for a target CU, and inter-prediction parameters for each inter-prediction block.

The inter-prediction parameters include a reference image index, an estimated motion vector index, and a motion vector residual.

Meanwhile, the intra-prediction information includes coding parameters that are referred to by the video image decoding device 1 when an intra-predicted image is generated by means of intra-prediction. More specifically, the intra-prediction information includes intra-prediction block division information that designates a division pattern into each intra-prediction block for a target CU, and intra-prediction parameters for each intra-prediction block. The intra-prediction parameters are parameters that control predicted image generation by means of intra-prediction in each intra-prediction block, and include parameters for restoring an intra-prediction mode.

The parameters for restoring the intra-prediction mode include: mpm_flag, which is a flag relating to an MPM (most probable mode, likewise hereinafter); mpm_idx, which is an index for selecting the MPM; and rem_idx, which is an index for designating a prediction mode other than the MPM. Here, the MPM is an estimated prediction mode having a high possibility of being selected by a target partition.

Furthermore, hereinafter, the case where "prediction mode" is simply written indicates an intra-prediction mode that is applied with respect to luminance. An intra-prediction mode that is applied to chrominance is written as a "chrominance prediction mode" and is distinct from a luminance prediction mode.

[Video Image Decoding Device]

Hereinafter, the configuration of the video image decoding device 1 according to the present embodiment will be described with reference to Fig. 1 to Fig. 13.

(Overview of Video Image Decoding Device)

The video image decoding device 1 generates a decoded image #2 by generating a predicted image for each prediction block and adding the generated predicted images and a prediction residual decoded from the coded data #1, and outputs the generated decoded image #2 to outside.

Here, the generation of the predicted images is carried out with reference to prediction parameters obtained by decoding the coded data #1. The prediction parameters are parameters to which reference is made in order to generate the predicted images.

Furthermore, hereinafter, a picture (frame), a slice, a tree block, a CU, a block, and a prediction block to be targets for decoding processing will be respectively called a target picture, a target slice, a target tree block, a target CU, a target block, and a target prediction block.

It should be noted that the size of a tree block is 64 × 64 pixels, for example, the size of a CU is 64 × 64 pixels, 32 × 32 pixels, 16 × 16 pixels, and 8 × 8 pixels, for example, and the size of a prediction block is 64 × 64 pixels, 32 × 32 pixels, 16 × 16 pixels, 8 × 8 pixels, 4 × 4 pixels, and the like, for example. However, these sizes are mere exemplifications, and the sizes of a tree block, a CU, and a prediction block may be sizes other than the sizes given above.

(Configuration of Video Image Decoding Device)

A schematic configuration of the video image decoding device 1 will be described with reference to Fig. 2 once again. As depicted in Fig. 2, the video image decoding device 1 is provided with a variable length decoding unit 11, an inverse quantization/inverse transform unit 13, a predicted image generation unit 14, an adder 15, and a frame memory 16.

[Variable Length Decoding Unit]

The variable length decoding unit 11 decodes various types of parameters included in the coded data #1 that is input from the video image decoding device 1. In the description hereinafter, the variable length decoding unit 11 carries out, as appropriate, the decoding of parameters that have been coded according to an entropy coding method such as CABAC, CAVLC, and the like.

First, the variable length decoding unit 11 demultiplexes and thereby separates the coded data #1 of one frame into various types of information included in the hierarchical structure depicted in Fig. 3. For example, the variable length decoding unit 11 refers to the information included in the various types of headers, and sequentially separates the coded data #1 into slices and tree blocks.

The variable length decoding unit 11 then refers to the tree block division information SP_TBLK included in the tree block header TBLKH, and divides a target tree block into CUs. Furthermore, the variable length decoding unit 11 decodes TT information TTI relating to a transform tree obtained with regard to the target CUs, and PT information PTI relating to a prediction tree obtained with regard to the target CUs.

It should be noted that, as mentioned above, the TT information TTI includes TU information TUI corresponding to TUs included in the transform tree. Furthermore, as mentioned above, the PT information PTI includes PU information PUI corresponding to prediction blocks included in the target prediction tree.

The variable length decoding unit 11 supplies the TT information TTI obtained with regard to a target CU, to the inverse quantization/inverse transform unit 13. Furthermore, the variable length decoding unit 11 supplies the PT information PTI obtained with regard to the target CU, to the predicted image generation unit 14.

[Inverse Quantization/Inverse Transform Unit]

The inverse quantization/inverse transform unit 13 executes inverse quantization/inverse transform processing on the basis of the TT information TTI for each block included in the target CU. Specifically, the inverse quantization/inverse transform unit 13 restores a prediction residual D for each pixel by carrying out inverse quantization and an inverse orthogonal transform on a quantized prediction residual included in the TU information TUI corresponding to the target TU, with regard to each target TU. It should be noted that an orthogonal transform here indicates an orthogonal transform from the pixel domain to the frequency domain. Consequently, an inverse orthogonal transform is a transform from the frequency domain to the pixel domain. Furthermore, an inverse DCT transform (inverse discrete cosine transform), an inverse DST transform (inverse discrete sine transform), and the like can be cited as examples of an inverse orthogonal transform. The inverse quantization/inverse transform unit 13 supplies the restored prediction residuals D to the adder 15.

[Predicted Image Generation Unit]

The predicted image generation unit 14 generates a predicted image on the basis of the PT information PTI for each prediction block included in the target CU. Specifically, the predicted image generation unit 14 generates a predicted image Pred by carrying out intra-prediction or inter-prediction in accordance with the prediction parameters included in the PU information PUI corresponding to the target prediction block, for each target prediction block. At such time, on the basis of the content of the prediction parameters, reference is made to a local decoded image P', which is a decoded image stored in the frame memory 16. The predicted image generation unit 14 supplies the generated predicted image Pred to the adder 15. It should be noted that the configuration of the predicted image generation unit 14 will be described in greater detail later on.

[Adder]

The adder 15 generates a decoded image P for the target CU by adding the predicted image Pred supplied from the predicted image generation unit 14 and a prediction residual D supplied from the inverse quantization/inverse transform unit 13.

[Frame Memory]

The frame memory 16 has sequentially recorded therein decoded images P that have been decoded. The frame memory 16 has recorded therein decoded images corresponding to all tree blocks that have been decoded prior to a target tree block (for example, all tree blocks preceding in raster scan order) at the point in time at which the target tree block is decoded.

Furthermore, at the point in time at which a target CU is decoded, decoded images corresponding to all CUs that have been decoded prior to the target CU are recorded.

It should be noted that, in the video image decoding device 1, at the point in time at which the decoded image generation processing in tree block units has finished with respect to all tree blocks within an image, the decoded image #2 corresponding to the coded data #1 of one frame that has been input to the video image decoding device 1 is output to outside.

(Definitions of Prediction Modes)

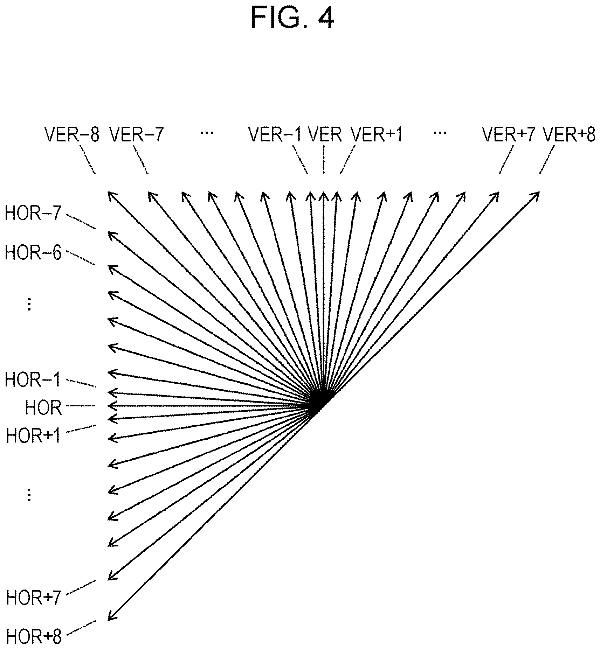

As previously mentioned, the predicted image generation unit 14 generates and outputs a predicted image on the basis of the PT information PTI. In a case where the target CU is an intra-CU, the PU information PTI that is input to the predicted image generation unit 14 includes a prediction mode (IntraPredMode). Hereinafter, definitions of prediction modes will be described with reference to Fig. 4.

(Overview)

The intra-prediction modes used by the video image decoding device 1 are classified into planar prediction (Intra_Planar), vertical prediction(Intra_Vertical), horizontal prediction (Intra_Horizontal), DC prediction (Intra_DC), and angular prediction (Intra_Angular). Horizontal prediction, vertical prediction, and angular prediction are collectively called directional prediction. Directional prediction is a prediction method in which a predicted image is generated by setting a peripheral region that is adjacent to the target prediction block as a reference region, and, broadly speaking, extrapolating pixels in the reference region in a specific direction.

Next, identifiers for each prediction mode included in directional prediction will be described using Fig. 4. Fig. 4 depicts prediction directions corresponding to prediction mode identifiers, with regard to 33 types of prediction modes belonging to directional prediction. The directions of the arrows in Fig. 4 represent prediction directions, or more accurately, indicate the directions of vectors from a prediction target pixel to pixels in the reference region to which reference is made by the prediction target pixel. In that sense, a prediction direction is also called a reference direction. The identifier of each prediction mode has associated therewith an identifier consisting of a combination of a code representing whether a principal direction is a horizontal direction (HOR) or a vertical direction (VER), and a displacement with respect to the principal direction. For example, HOR is assigned to horizontal prediction, VER is assigned to vertical prediction, VER+8 is assigned to a prediction mode in which reference is made to a peripheral pixel in the upper-right 45-degree direction, VER-8 is assigned to a prediction mode in which reference is made to a peripheral pixel in the upper-left 45-degree direction, and the code HOR+8 is assigned to a prediction mode in which reference is made to a peripheral pixel in the bottom left 45-degree direction. Seventeen prediction modes of VER-8 to VER+8 in which the principal direction is a vertical direction, and 16 prediction modes of HOR-7 to HOR+8 in which the principal direction is horizontal prediction are defined in directional prediction.

(Details of Predicted Image Generation Unit)

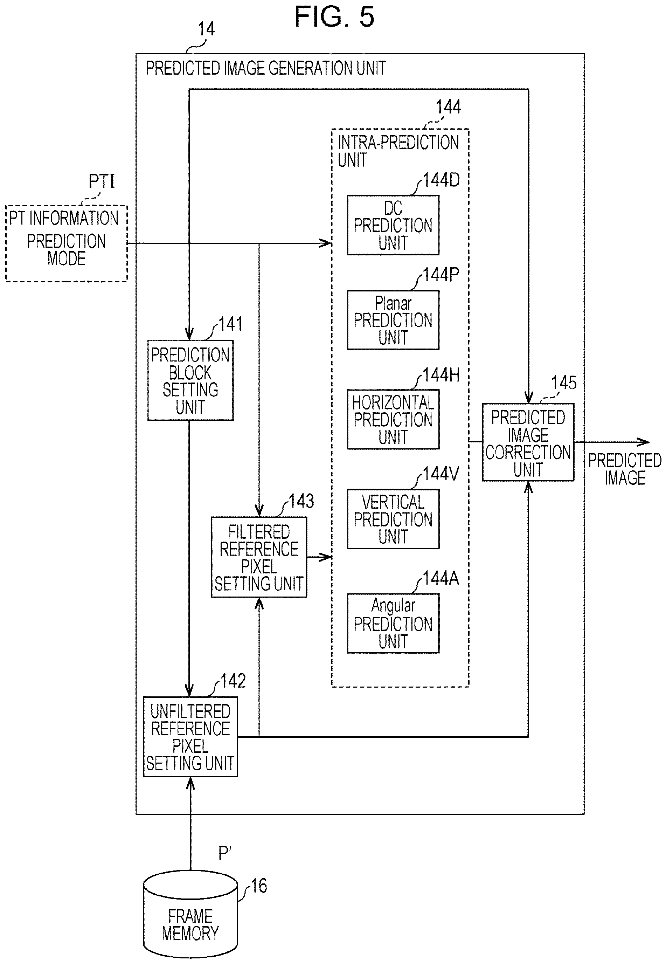

Next, details of the configuration of the predicted image generation unit 14 will be described using Fig. 5. Fig. 5 is a functional block diagram depicting an example of the configuration of the predicted image generation unit 14. It should be noted that the present configuration example depicts functional blocks pertaining to intra-CU predicted image generation from among the functions of the predicted image generation unit 14.

As depicted in Fig. 5, the predicted image generation unit 14 is provided with a prediction block setting unit 141, an unfiltered reference pixel setting unit 142, a filtered reference pixel setting unit 143, an intra-prediction unit 144, and a predicted image correction unit 145.

The prediction block setting unit 141 sets prediction blocks included in the target CU as target prediction blocks in a predetermined setting order, and outputs information relating to the target prediction blocks (target prediction block information). The target prediction block information includes at least a target prediction block size, a target prediction block position, and an index indicating a luminance or chrominance plane of a target prediction block.

The unfiltered reference pixel setting unit 142 sets a neighboring region adjacent to the target prediction block as a reference region on the basis of the target prediction block size and the target prediction block position indicated by the target prediction block information that has been input. Next, pixel values (decoded pixel values) of a decoded image stored in positions corresponding within the frame in the frame memory are set as unfiltered reference pixel values for each pixel within the reference region. An unfiltered reference pixel value r(x, y) for a position (x, y) within the prediction block is set according to the following formula using a decoded pixel value u(px, py) of a target picture expressed based on the upper-left pixel of a picture.

$$r(x, y) = u(xB + x, yB + y) \quad x = -1, \; y = -1 \;..\; (nS * 2 - 1) \text{ and}$$
$$x = 0 \;..\; (nS * 2 - 1), \; y = -1$$

Here, (xB, yB) represents the position within a picture of the upper-left pixel of the target prediction block, and nS represents the size of the target prediction block and indicates the larger value out of the width or height of the target prediction block. In the above formula, as described with reference to Fig. 14(a), decoded pixel values included in a line of decoded pixels adjacent to the upper edge of the target prediction block and a column of decoded pixels adjacent to the left edge of the target prediction block are copied as corresponding unfiltered reference pixel values. It should be noted that in a case where there is no decoded pixel value corresponding to a specific reference pixel position or reference cannot be made thereto, a predefined value may be used (for example, 1 << (bitDepth - 1) in a case where a pixel bit depth is bitDepth), or a decoded pixel value that is present near the corresponding decoded pixel value and to which reference can be made may be used.

The filtered reference pixel setting unit 143 applies a filter to unfiltered reference pixel values that have been input, in accordance with the prediction mode that has been input, and derives and outputs a filtered reference pixel value s[x, y] in each position (x, y) in the reference region. Specifically, a filtered reference pixel value is derived with a low pass filter being applied to the unfiltered reference pixel values in the position (x, y) and its neighboring thereof. It should be noted that it is not always necessary for a low pass filter to be applied in all cases, and it is sufficient as long as a filtered reference pixel is derived by means of a low pass filter being applied for some of the directional prediction modes, at least. For example, as with HEVC intra-prediction, an unfiltered reference pixel value may be set as a filtered reference pixel value without being altered, in a case where the prediction mode is DC prediction and in a case where the prediction block size is 4 × 4 pixels. Furthermore, whether or not a low pass filter is to be applied may be switched by means of a flag that is decoded from coded data.

The intra-prediction unit 144 generates and outputs, as a filtered predicted image, a predicted image of the target prediction block on the basis of the prediction mode and the filtered reference pixel values that has been input. The intra-prediction unit 144 includes a DC prediction unit 144D, a planar prediction unit 144P, a horizontal prediction unit 144H, a vertical prediction unit 144V, and an angular prediction unit 144A. The intra-prediction unit 144 selects a specific prediction unit in accordance with the prediction mode that has been input, and inputs the filtered reference pixel values thereto. The relationships between the prediction modes and the corresponding prediction units are as follows.

- DC prediction ... DC prediction unit 144D
- Planar prediction ... planar prediction unit 144P
- Horizontal prediction ... horizontal prediction unit 144H · Vertical prediction ... vertical prediction unit 144V
- Angular prediction ... angular prediction unit 144A

The DC prediction unit 144D derives a DC prediction value corresponding to an average value of the filtered reference pixel values that have been input, and outputs a predicted image in which derived DC prediction values are set as pixel values.

The planar prediction unit 144P generates and outputs a predicted image by means of values derived by linear addition on a plurality of filtered reference pixel values in accordance with the distance to a prediction target pixel. For example, a pixel value q[x, y] of a predicted image can be derived according to the below formula using filtered reference pixel values s[x, y] and the size nS of the target prediction block.

```
q[x, y] = (

(nS - 1 - x) * s[-1, y] + (x + 1) * s[nS, -1] +

(nS - 1 - y) * s[x,-1] + (y + 1) * s[-1, nS] + nS) >> (k + 1)
```

Here, x, y = 0 .. nS - 1, and k = log2(nS) is defined.

The horizontal prediction unit 144H generates and outputs a predicted image by extrapolating, in a horizontal direction, filtered reference pixel values in the reference region adjacent to the left edge of the target prediction block.

The vertical prediction unit 144V generates and outputs a predicted image by extrapolating, in a vertical direction, filtered reference pixel values in the reference region adjacent to the upper edge of the target prediction block.

The angular prediction unit 144A generates and outputs a predicted image using filtered reference pixels in a prediction direction (reference direction) indicated by the prediction mode. In angular prediction, a reference region adjacent to the above or left of the prediction block is set as a principal reference region in accordance with a value of a principal direction flag bRefVer, and filtered reference pixel values in the principal reference region are set as principal reference pixel values. The generation of a predicted image is executed with reference to the principal reference pixel values in units of lines or columns within the prediction block. In a case where the value of the principal direction flag bRefVer is 1 (the principal direction is a vertical direction), the units in which a predicted image is generated are set to lines and the reference region above the target prediction block is set as the principal reference region. A principal reference pixel value refMain[x] is set according to the following formula using the filtered reference pixel values s[x, y].

```
refMain[x] = s[-1 + x, -1], with x = 0 .. 2 * nS

refMain[x] = s[-1, -1 + ((x * invAngle + 128) >> 8)], with x =

-nS .. -1
```

It should be noted that invAngle here corresponds to a value obtained by scaling the inverse of a displacement intraPredAngle in the prediction direction. According to the above formula, in a range in which x is equal to or greater than 0, a filtered reference pixel value value in the reference region adjacent to the upper edge of the target prediction block is set as the value of refMain[x]. Furthermore, in a range in which x is less than 0, a filtered reference pixel value in the reference region adjacent to the left edge of the target prediction block is set in a position derived based on the prediction direction, as the value of refMain[x]. The predicted pixel value q[x, y] is calculated according to the following formula.

q[x, y] = ((32 - iFact) * refMain[x + iIdx + 1] + iFact * refMain[x + iIdx + 2] + 16) >> 5 Here iIdx and iFact represent the position of a principal reference pixel used in the generation of a prediction target pixel calculated based on a gradient intraPredAngle decided according to the prediction direction and the distance (y + 1) in a vertical direction between a prediction target line and the principal reference region. iIdx corresponds to a position having integer precision in pixel units, and iFact corresponds to a position having fractional precision in pixel units, which are derived according to the formulas below.

```
iIdx = ((y + 1) * intraPredAngle) >> 5


iFact = ((y + 1) * intraPredAngle) & 31
```

Here, '&' is an operator representing a logical AND bit operation, and the result of "A & 31" means the remainder of dividing an integer A by 32.

In a case where the value of the principal direction flag bRefVer is 0 (the principal direction is a horizontal direction), the units in which a predicted image is generated are set to columns and the reference region at the left side of the target PU is set as the principal reference region. The principal reference pixel value refMain[x] is set according to the following formula using the filtered reference pixel values s[x, y] in the principal reference region.

$$\mathrm{refMain[x]} = \mathrm{s[-1, -1 + x]}, \text{ with } x = 0 .. nS$$

$$\mathrm{refMain[x]} = \mathrm{s[-1 + ((x * invAngle + 128) >> 8), -1]}, \text{ with } x = -nS .. -1$$

The predicted pixel value q[x, y] is calculated according to the following formula.

q[x, y] = ((32 - iFact) * refMain[y + iIdx + 1] + iFact * refMain[y + iIdx + 2] + 16) >> 5 Here iIdx and iFact represent the position of a principal reference pixel used in the generation of a target pixel calculated based on the gradient intraPredAngle and the distance (x + 1) in a horizontal direction between a prediction target column and the principal reference region. iIdx corresponds to a position having integer precision in pixel units, and iFact corresponds to a position having fractional precision in pixel units, which are derived according to the formulas below.

$$\mathrm{iIdx} = ((x + 1) * \mathrm{intraPredAngle}) >> 5$$

$$\mathrm{iFact} = ((x + 1) * \mathrm{intraPredAngle}) \, \& \, 31$$

It should be noted that the configuration of the intra-prediction unit 144 is not restricted to the aforementioned. For example, a predicted image generated by the horizontal prediction unit 144H and a predicted image generated by the vertical prediction unit 144V can be derived also by the angular prediction unit 144A, and therefore a configuration is also possible in which the angular prediction unit 144A is provided without the horizontal prediction unit 144H and the vertical prediction unit 144V being provided.

(Details of Predicted Image Correction Unit)

The predicted image correction unit 145 performs weighting and adding an unfiltered reference pixel value and a filtered predicted pixel value to a target which is each pixel constituting a filtered predicted image, in accordance with the distance between the reference region and a target pixel, in accordance with a prediction mode that has been input, and thereby corrects and outputs a filtered predicted image as a predicted image (corrected predicted image).

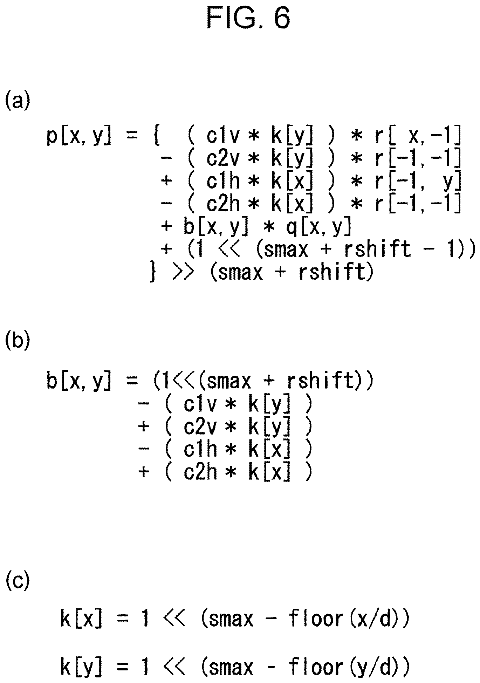

Processing in which the predicted pixel value p[x, y] in a position (x, y) within the prediction block is derived, in the predicted image correction unit 145 will be described with reference to Fig. 6. Fig. 6(a) depicts a formula for deriving the predicted pixel value p[x, y]. The predicted pixel value p[x, y] is derived by weighted sum of the filtered predicted pixel value q[x, y] and the unfiltered reference pixel values r[x, -1], r[-1, y], and r[-1, -1]. Here, smax is a predefined positive integer value corresponding to an adjustment term for expressing the distance weighting k as an integer, and is called a first normalization adjustment term. For example, smax = 6 is used. rshift is a predefined positive integer value for normalizing a reference intensity coefficient, and is called a second normalization adjustment term. For example, rshift = 7 is used. The combination of the values of rshift and smax is not restricted to the aforementioned values, and other values with which the formula depicted in Fig. 6(a) represents weighted sum and the situation where the distance weighting k is expressed as an integer is satisfied may be used as predefined values.

Weighting coefficients for unfiltered reference pixel values are derived by multiplying reference intensity coefficients (c1v, c2v, c1h, and c2h) that are determined in advance for each prediction direction, by the distance weighting k (k[x] or k[y]), which is dependent on the distance (x or y) to the reference region. More specifically, the product of the reference intensity coefficient c1v and the distance weighting k[y] (vertical direction distance weighting) may be used as a weighting coefficient (first weighting coefficient w1v) for the unfiltered reference pixel value r[x, -1] (upper unfiltered reference pixel value). Furthermore, the product of the reference intensity coefficient c1h and the distance weighting k[x] (horizontal direction distance weighting) may be used as a weighting coefficient (second weighting coefficient w1h) for the unfiltered reference pixel value r[-1, y] (left unfiltered reference pixel value). Furthermore, the product of the reference intensity coefficient c2v and the distance weighting k[y] (vertical direction distance weighting) may be used as a weighting coefficient (third weighting coefficient w2v) for the unfiltered reference pixel value r[-1, -1] (upper-left unfiltered reference pixel value). Furthermore, the product of the reference intensity coefficient c2h and the distance weighting k[x] (horizontal direction distance weighting) may be used as a weighting coefficient (fourth weighting coefficient w2h) for the upper-left unfiltered reference pixel value.

Fig. 6(b) depicts a formula for deriving the weighting coefficient b[x, y] for the filtered predicted pixel value q[x, y]. The value of the weighting coefficient b[x, y] is derived in such a way that the sum total of the products of the weighting coefficients and the reference intensity coefficients is equal to "1 << (smax + rshift)". This value is set with the intention of normalizing the products of the weighting coefficients and the reference intensity coefficients, taking into consideration the right shift operation of (smax + rshift) in Fig. 6(a).

In Fig. 6(c), for the distance weighting k[x] representing the formula for deriving the distance weighting k[x], a value is set that is obtained by left shifting 1 by using a difference value for which a value "floor(x / d)", which monotonically increases according to the horizontal distance x between the target pixel and the reference region, is subtracted from smax. Here, floor() is a floor function, d is a predefined parameter corresponding to the prediction block size, and "x / d" represents the division of x by d (rounded down to the nearest decimal). A definition for which the horizontal distance x is replaced with a vertical distance y in the definition of the aforementioned distance weighting k[x] can also be used for the distance weighting k[y]. The values of the distance weightings k[x] and k[y] are values that decrease as the value of x or y increases.

According to the aforementioned method for deriving a predicted pixel value described with reference to Fig. 6, the value of the distance weighting (k[x] or k[y]) becomes a lower value as the reference distance (x or y), which is the distance between the target pixel and the reference region, increases. Consequently, the value of a weighting coefficient for an unfiltered reference pixel obtained by means of multiplication of a predefined reference intensity coefficient and a distance weighting also becomes a low value. Therefore, a predicted pixel value can be derived by correcting a filtered predicted pixel value with a greater weighting of unfiltered reference pixel value as the position within a prediction block becomes nearer to the reference region. Generally, the nearer to the reference region, the higher the possibility that an unfiltered reference pixel value will be suitable as an estimated value for the pixel value of a target pixel compared to a filtered predicted pixel value. Consequently, a predicted pixel value derived according to the formulas of Fig. 6 is a predicted pixel value having high prediction accuracy compared to a case where a filtered predicted pixel value is directly set as a predicted pixel value. In addition, according to the formulas of Fig. 6, a weighting coefficient for an unfiltered reference pixel value can be derived by multiplication of a reference intensity coefficient and a distance weighting. Therefore, weighting coefficients can be derived without using a right shift operation and division, by calculating and retaining the values of distance weightings in a table in advance for each distance.

The reference distance has been defined as the distance between the target pixel and the reference region, and the position x within a prediction block of a target pixel and the position y within the prediction block of the target pixel have been given as an example of the reference distance; however, it should be noted that another variable representing the distance between a target image and the reference region may be used as the reference distance. For example, the reference distance may be defined as the distance between a predicted pixel and the closest pixel in the reference region. Furthermore, the reference distance may be defined as the distance between a predicted pixel and a pixel in the reference region adjacent to the upper-left of the prediction block. Furthermore, in a case where the reference distance is predetermined according to the distance between two pixels, that distance may be a distance in a broad sense. A distance $d(a, b)$ in a broad sense satisfies the properties of non-negativity (positive definiteness): $d(a, b) \geq 0$, $a = b \to d(a, b) = 0$, symmetry: $d(a, b) = d(b, a)$, and triangular inequality: $d(a, b) + d(b, c) \geq d(a, c)$ with respect to any three points $a, b, c \in X$. In the description hereinafter, the reference distance is written as the reference distance x; however, it should be noted that x is not restricted to a distance in a horizontal direction, and can also be applied to an arbitrary reference distance. For example, in a case where the calculation formula for the distance weighting k[x] is given as an example, this can also be applied to the distance weighting k[y] calculated using the reference distance y in a vertical direction as a parameter.

<Flow of Predicted Image Correction Unit 145>

Hereinafter, the operation of the predicted image correction unit 145 will be described with reference to Fig. 1. Fig. 1 is a flow diagram depicting the operation of the predicted image correction unit 145.

(S21) The predicted image correction unit 145 sets reference intensity coefficients (c1v, c2v, c1h, and c2h), which are determined in advance for each prediction direction.

(S22) The predicted image correction unit 145 respectively derives the distance weighting k[x] in the x direction and the distance weighting k[y] in the y direction in accordance with the distance (x or y) between the target pixel (x, y) and the reference region.

(S23) The predicted image correction unit 145 derives the weighting coefficients below with the reference intensity coefficients derived in step S21 being multiplied by the distance weightings derived in S22.

$$\text{First weighting coefficient } w1v = c1v * k[y]$$

$$\text{Second weighting coefficient } w1h = c1h * k[x]$$

$$\text{Third weighting coefficient } w2v = c2v * k[y]$$

$$\text{Fourth weighting coefficient } w2h = c2h * k[x]$$

(S24) The predicted image correction unit 145 calculates the product of unfiltered reference pixel values (r[x, -1], r[-1, y], r[-1, -1], and r[-1, -1]) corresponding to the weighting coefficients (w1v, w1h, w2v, and w2h) derived in step S23.

Product m1 of unfiltered reference pixel value r[x, -1] and first weighting coefficient w1 = w1v * r[x, -1]
Product m2 of unfiltered reference pixel value r[-1, y] and second weighting coefficient w1h = w1h * r[-1, y]
Product m3 of unfiltered reference pixel value r[-1, -1] and third weighting coefficient w2v = w2v * r[-1, -1]
Product m4 of unfiltered reference pixel value r[-1, -1] and fourth weighting coefficient w2h = w2h * r[-1, -1]

(S25) The predicted image correction unit 145 derives the weighting coefficient b[x, y] according to the below formula in such a way that the sum total of the first weighting coefficient w1v, the second weighting coefficient w1h, the third weighting coefficient w2v, the fourth weighting coefficient w2h, and the weighting coefficient b[x, y] is "1 << (smax + rshift)", with respect to the target pixel (x, y).

$$b[x, y] = (1 << (smax + rshift)) - w1v - w1h + w2v + w2h$$

(S26) The predicted image correction unit 145 calculates a product m5 of the filtered predicted pixel value q[x, y] corresponding to the target pixel (x, y) and the weighting coefficient b[x, y].

$$m5 = b[x, y] * q[x, y]$$

(S27) The predicted image correction unit 145 derives the sum total sum of the products m1, m2, m3, and m4 derived in step S24, the product m5 derived in step S26, and a rounding adjustment term (1 << (smax + rshift - 1)) according to the below formula.

$$sum = m1 + m2 - m3 - m4 + m5 + (1 << (smax + rshift - 1))$$

(S28) The predicted image correction unit 145 derives the predicted pixel value p[x, y] of the target pixel (x, y) by a right shift operation with respect to the added value sum derived in step S27, by the total of the first normalization adjustment term and the second normalization adjustment term (smax + rshift) as indicated below.

$$p[x, y] = sum >> (smax + rshift)$$

The rounding adjustment term is expressed by the first normalization adjustment term smax and the second normalization adjustment term rshift, with (1 << (smax + rshift - 1)) being preferred; however, it should be noted that there is no restriction thereto. For example, the rounding adjustment term may be 0, or may be another predetermined constant.

Hereinabove, the predicted image correction unit 145 generates a predicted image p[x, y] of within a prediction block by repeating the processing indicated in steps S21 to S28 for all pixels within the prediction block. It should be noted that the operation of the predicted image correction unit 145 is not restricted to the aforementioned steps, and can be altered within an implementable range.

(Flow of Predicted Image Generation Processing)

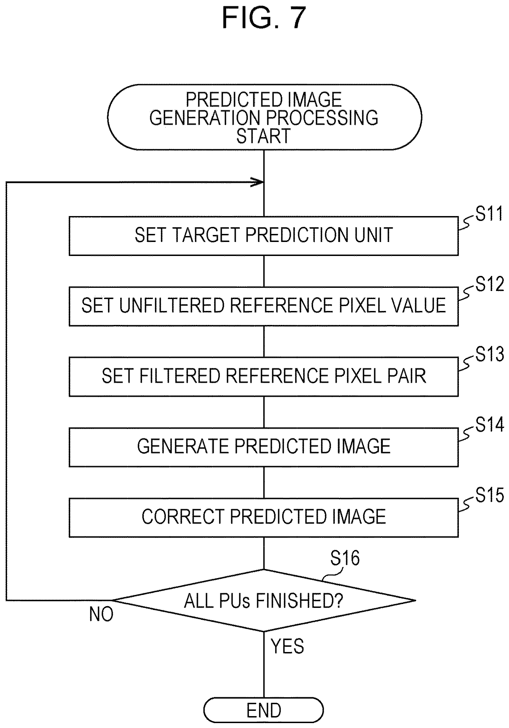

Next, an overview of the predicted image generation processing in CU units in the predicted image generation unit 14 will be described using the flowchart of Fig. 7. When the predicted image generation processing in CU units starts, first, the prediction unit setting unit 141 sets one prediction block included within a CU as a target prediction block in accordance with a predefined order, and outputs target prediction block information to the unfiltered reference pixel setting unit 142 (S11). Next, the unfiltered reference pixel setting unit 142 sets reference pixels for the target prediction block using decoded pixel values read out from an external frame memory and outputs unfiltered reference pixel values to the filtered reference pixel setting unit 143 and the predicted image correction unit 145 (S12). Next, the filtered reference pixel setting unit 143 derives filtered reference pixel values from the unfiltered reference pixel values that were input in S12 and outputs the filtered reference pixel values to the intra-prediction unit 144 (S13). Next, the intra-prediction unit 144 generates a predicted image for the target prediction block from the input prediction mode and the filtered reference pixels that were input in S13 and outputs the predicted image as a filtered predicted image (S14). Next, the predicted image correction unit 145 corrects the filtered predicted image that was input in S14 on the basis of the prediction mode and the unfiltered reference pixel values that were input in S12 and generates and outputs a predicted image. Next, it is determined whether the processing for all prediction blocks (PUs) within the CU has ended; if not ended, processing returns to S11 and the next prediction block is set, and if ended, processing ends (S16) .

(Effect of Video Image Decoding Device)

The video image decoding device in the present embodiment described above is provided with the predicted image generation unit 14 including the predicted image correction unit 145 as a constituent element, and the predicted image generation unit 14 generates a predicted image (corrected predicted image) from unfiltered reference pixel values and filtered predicted pixel values by means of weighted sum based on weighting coefficients, with each pixel of the filtered predicted image being targeted. The aforementioned weighting coefficients are a product of a reference intensity coefficient that is determined according to the prediction direction indicated by the prediction mode, and a distance weighting that monotonically decreases according to an increase in the distance between the target pixel and the reference region. Consequently, the value of the distance weighting (for example, k[x] or k[y]) becomes a lower value as the reference distance (for example, x or y) increases, and, consequently, predicted pixel values having high prediction accuracy can be generated by generating a predicted image with a greater weighting of unfiltered reference pixel values as the reference distance decreases. In addition, since the weighting coefficient is a product of a reference intensity coefficient and a distance weighting, the weighting coefficient can be derived without using a right shift operation and division, by calculating and retaining the value of distance weightings in a table in advance for each distance.

[Modified Example 1: Configuration in Which Distance Weighting Is Set as 0 When Distance Increases]

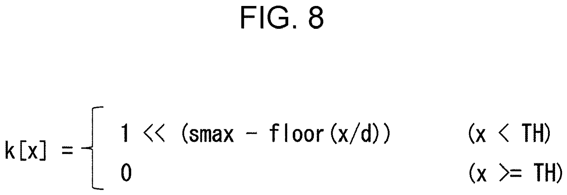

A description has been given with reference to Fig. 6(a) in which, in the predicted image correction unit 145 in the aforementioned embodiment, a weighting coefficient is derived as a product of a reference intensity coefficient and a distance weighting. As depicted in Fig. 6(c), the distance weighting k[x], which decreases according to an increase in the distance x (reference distance x) between the target pixel and the reference region, was used as a value for the distance weighting; however, the predicted image correction unit 145 may be configured in such a way that the distance weighting k[x] is set as 0 in a case where the reference distance x is equal to or greater than a predetermined value. An example of a calculation formula for the distance weighting k[x] in this kind of configuration is depicted in Fig. 8. According to the calculation formula for the distance weighting k[x] of Fig. 8, in a case where the reference distance x is less than a predetermined threshold value TH, the distance weighting k[x] is set according to the reference distance x by means of the same calculation formula as in Fig. 6(c). In addition, in a case where the reference distance x is equal to or greater than the predetermined threshold value TH, the value of the distance weighting k[x] is set to 0 regardless of the reference distance x. A predefined value can be used as the value of the threshold value TH, and, for example, in a case where the value of the first normalization adjustment term smax is 6 and the value of the second normalization adjustment term rshift is 7, predicted image correction processing can be executed with the value of the threshold value TH being set to 7.

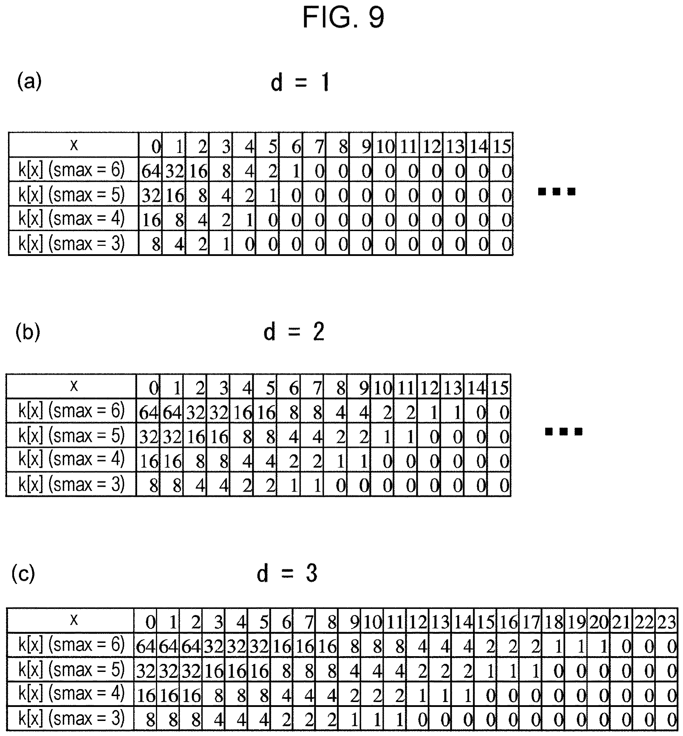

It should be noted that the threshold value TH may change depending on the first normalization adjustment term smax. More specifically, a setting may be implemented in such a way that the threshold value TH also increases according to an increase in the first normalization adjustment term smax. An example for a setting this kind of threshold value TH will be described with reference to Fig. 9. Fig. 9 is a table depicting the relationship between the reference distance x and the weighting coefficient k[x] in cases where the first normalization adjustment term smax is different. Here, it is assumed that the value of the second normalization adjustment term rshift is 7. Figs. 9(a), 9(b), and 9(c) respectively depict the relationship between the reference distance x and the weighting coefficient k[x] in cases where the value of the variable d indicating a block size is 1, 2, and 3. The variable d is a variable that increases according to an increase in the prediction block size, and, for example, d = 1 is assigned for the prediction block size 4 × 4, d = 2 is assigned for the prediction block sizes 8 × 8 and 16 × 16, and d = 3 is assigned for prediction block sizes greater than 32 × 32. In this sense, the variable d is also called prediction block size identification information d. In Fig. 9(a), different threshold values TH are set according to the magnitude of the first normalization adjustment term smax.

The relationship between the first normalization adjustment term smax and the threshold value TH depicted in Fig. 9(a) is as follows.

- TH = 7 when smax = 6
- TH = 6 when smax = 5
- TH = 5 when smax = 4
- TH = 4 when smax = 3

The aforementioned relationship can be expressed by means of the relational expression TH = 1 + smax. Similarly, the relationship between smax and TH in the table depicted in Fig. 9(b) can be expressed by means of the relational expression TH = 2 * (1 + smax). Similarly, the relationship between smax and TH in the table depicted in Fig. 9(c) can be expressed by means of the relational expression TH = 3 * (1 + smax). In other words, the threshold value TH can be expressed by means of a relational expression, TH = d * (1 + smax), on the basis of the prediction block size identification information d and the first normalization adjustment term smax. The first normalization adjustment term smax is a number that represents the expression accuracy of the weighting coefficient k[x], and the aforementioned relationship can also be expressed with a larger threshold value TH being set in a case where the expression accuracy of the weighting coefficient k[x] is high. Consequently, in a case where the expression accuracy of the weighting coefficient k[x] is low, the value of the weighting coefficient k[x] becomes relatively low, and therefore, by setting a lower threshold value TH, a greater amount of multiplication can be omitted in the predicted image correction processing.

Furthermore, as described in Fig. 6(c), in a case where the distance weighting k[x] is derived by means of a calculation (for example, smax - floor(x / d)) in which a number corresponding to x is subtracted from smax, smax - floor(x / d) becomes negative when x increases. It is possible in certain processing systems to execute processing for a negative left shift operation (the result being equivalent to a right shift operation), but in other processing systems it is not possible to execute a negative left shift operation and it is only possible to execute a left shift of a number that is equal to or greater than 0. A negative left shift operation can be avoided by setting the weighting coefficient k[x] as 0 when greater than the threshold value TH, and in other cases, by using a method for deriving k[x] that monotonically decreases according to the distance x as in the present embodiment.

As described above, it is possible to configure the predicted image correction unit 145 in such a way that the distance weighting k[x] is set as 0 in a case where the reference distance x is equal to or greater than a predetermined value. In such a case, multiplication in the predicted image correction processing can be omitted with respect to a partial region (a region in which the reference distance x is equal to or greater than the threshold value TH) in a prediction block.

For example, the calculation of a sum value is included in a portion of the calculations for the predicted image correction processing, and can be expressed in the form of sum = m1 +m2 - m3 - m4 + m5 + (1 << (smax + rshift - 1)). When x exceeds the threshold value TH, k[x] = 0, and therefore w1h and w2h become 0, and consequently m2 and m4 also become 0. It is therefore possible to simplify to the calculation of sum = m1 - m3 + m5 + (1 << (smax + rshift - 1)). Similarly, the processing for b[x, y] = (1 << (smax + rshift)) - w1v - w1h + w2v + w2h can be simplified as b[x, y] = (1 << (smax + rshift)) - w1v + w2v.

Similarly, when y exceeds the threshold value TH, k[y] = 0, and therefore w1v and w2v become 0, and consequently m1 and m3 also become 0. It is therefore possible for the calculation of the sum value to be simplified to sum = m2 - m4 + m5 + (1 << (smax + rshift - 1)). Similarly, the processing for b[x, y] = (1 << (smax + rshift)) - w1v - w1h + w2v + w2h can be simplified as b[x, y] = (1 << (smax + rshift)) - w1h + w2h.

In addition to the effect that the number of multiplications can be simply reduced, there is an effect in that an implementation is also possible in which processing is carried out all at once by means of parallel processing with which multiplication is reduced in all of the partial regions.

It should be noted that, as mentioned above, by setting the threshold value TH to be a threshold value TH that is different according to the magnitude of the variable d and the first normalization adjustment term smax, the deriving of the weighting coefficient k[x] and the predicted image correction processing can be reduced to the maximum limit; however, as a more simplified configuration, a fixed value TH can also be used as the threshold value TH. In particular, in most software, parallel processing is carried out using multiples of 4 or 8, and therefore, by using a fixed value such as TH = 8, 12, 16, or the like, it is possible to derive a weighting coefficient k[x] that is suitable for a parallel operation, with a simple configuration.

Furthermore, as the threshold value TH, it is also possible to set a predetermined value that is decided according to the prediction block size. For example, a value that is half of the width of the prediction block size may be set as the value of the threshold value TH. In this case, the value of the threshold value TH for a prediction block size of 16 × 16 is 8. Furthermore, the threshold value TH may be set as 4 in a case where the prediction block size is $8 \times 8$ or less, and the threshold value TH may be set as 8 in cases of other prediction block sizes. In other words, the threshold value TH is set in such a way that the weighting coefficient becomes 0 in a pixel positioned in the bottom right region of a prediction block. In a case where predicted image generation processing in prediction blocks is to be executed in parallel, it is often the case that execution is carried out in region units obtained by a prediction block being divided by a multiple of 2, and therefore, by setting the threshold value TH in such a way that the weighting coefficient for the entire bottom right region is set as 0, the predicted image correction processing can be executed by means of the same processing for all pixels within the same region.

[Modified Example 2: Configuration in Which Distance Weighting Is Derived Using Table]

In the predicted image correction unit 145 in the aforementioned embodiment, a description was given in which the value of the distance weighting k[x] is derived according to the calculation formula depicted in Fig. 6(c); however, the predicted image correction processing can also be executed with the distance weighting k[x] being decided based on the relationship between the reference distance x, the first normalization adjustment term smax, the prediction block size identification information d, and the distance weighting k[x] saved in a recording region of a memory or a hard disk. For example, the tables (distance weighting derivation tables) depicted in Fig. 9 can be retained in a recording region, and the predicted image correction unit 145 can decide the distance weighting k[x] by referring to a specific entry ktable[x] of a distance weighting derivation table ktable[] (in Fig. 9, a table is also simply indicated as k[]) on the basis of the first normalization adjustment term smax, the prediction block size identification information d, and the reference distance x. In other words, the distance weighting k[x] can be decided by referring to distance weighting derivation tables in a recording region with the reference distance x, the first normalization adjustment term smax, and the prediction block size identification information d serving as indexes. The derivation processing for the distance weighting k[x] in a case where the distance weighting derivation tables depicted in Fig. 9 are used is realized by executing the following S301 to S303 in order.

(S301) A corresponding table is selected according to the value of the prediction block size identification information d. Specifically, the table of Fig. 9(a) is selected in a case where d = 1, the table of Fig. 9(b) is selected in a case where d = 2, and the table of Fig. 9(c) is selected in a case where d = 3. It should be noted that this procedure can be omitted in a case where the relationship between the reference distance x and the distance weighting k[x] is the same regardless of the prediction block size.

(S302) A corresponding row within the table is selected according to the value of the first normalization adjustment term smax. For example, in a case where smax = 6, the row indicated with "k[x] (smax = 6)" in the table selected in S301 is selected. It should be noted that this procedure can be omitted in a case where the value of smax is a predefined value.

(S303) k[x] corresponding to the reference distance x is selected from the row selected in S302 and is set as the value of the distance weighting k[x].

For example, in a case where the prediction block size is $4 \times 4$ (the value of the prediction block size identification information d is 1), the value of the first normalization adjustment term is 6, and the reference distance x is 2, the table of Fig. 9(a) is selected in the procedure of S301, the row of "k[x](smax = 6)" is selected in the procedure of S302, and the value "16" indicated in the column of "x = 2" is set as the weighting coefficient k[x] in the procedure of S303.

It should be noted that in a case where S301 and S302 are omitted, processing is constituted in which the distance weighting k[x] is decided with reference to the distance weighting derivation tables in the recording region with the reference distance x serving as an index.

A description has been given with the tables of Fig. 9 being cited as an example of distance weighting derivation tables; however, another table can also be used as a distance weighting derivation table. In such a case, it is necessary for the distance weighting derivation table to satisfy at least the following property 1.

(Property 1) k[x] is a weakly monotonically increasing function of the reference distance x. In other words, when a reference distance x1 and a reference distance x2 satisfy the relationship of x1 < x2, the relationship of k[x2] >= k[x1] is established.

In a case where the distance weighting derivation table satisfies property 1, the predicted image correction processing can be executed with a smaller distance weighting being set for a pixel in a position having a larger reference distance.

Furthermore, it is preferable that the distance weighting derivation table satisfy the following property 2 in addition to the aforementioned property 1.

(Property 2) k[x] is a value expressed by a power of 2.

The value of a distance weighting k[x] derived with reference to a distance weighting derivation table having the aforementioned property 2 becomes a power of 2. However, as depicted in Fig. 6(a), the predicted image correction processing includes processing in which a weighting coefficient is derived by multiplying the reference intensity coefficient (for example, c1v) by the distance weighting k[x]. Consequently, in a case where the property 2 is satisfied, the multiplication by the distance weighting k[x] is a multiplication by a power of 2, and therefore the multiplication can be executed by means of a left shift operation, and a weighting coefficient can be derived with less of a processing cost than multiplication. Furthermore, in a case where k[x] is a power of 2, with software with which multiplication is comparatively simple, an implementation can be carried out by means of a product of k[x], and with hardware with which a shift operation is comparatively simple, the predicted image correction processing can be executed by means of a shift operation for a weighting shift value s[x] that indicates the relationship of k[x] = 1 << s[x].

Hereinabove, as described as modified example 2, a configuration can be realized in which the predicted image correction processing is executed with the distance weighting k[x] being decided based on the relationship between the reference distance x and the distance weighting k[x] saved in the recording region. In such a case, the distance weighting can be derived with fewer operations compared to a case where the distance weighting k[x] is derived by means of a calculation formula such as that depicted in Fig. 6(c).

[Modified Example 3: Configuration According to Distance Left Shift Value]

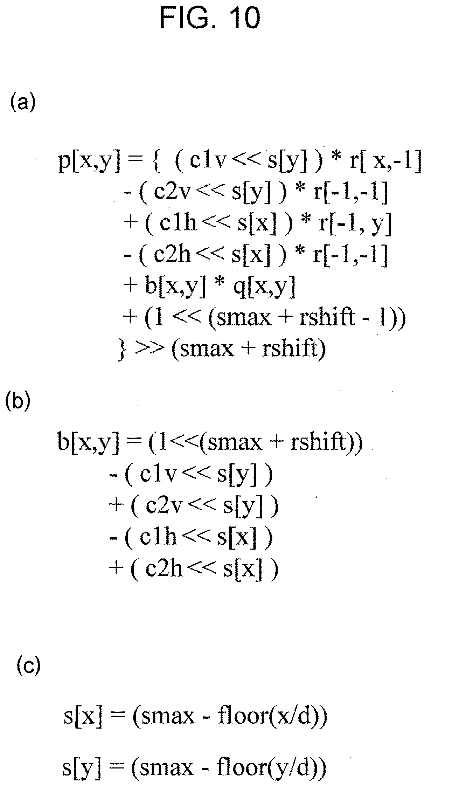

In the predicted image correction unit 145 in the aforementioned embodiment, the weighting coefficient is derived using the product of the reference intensity coefficient and the distance weighting (for example, c1v * k[y]) as depicted in Fig. 6(a). However, another method that is equivalent to a product may be used to derive the weighting coefficient, and, for example, it is also possible to configure the predicted image correction unit 145 to derive the weighting coefficient by applying a left shift, in which the distance shift value serves as the shift width, to the reference intensity coefficient. Hereinafter, this example will be described with reference to Fig. 10.

Fig. 10(a) depicts a formula for deriving the predicted pixel value p[x, y] in a position (x, y) within a prediction block. In the derivation formula, for example, a weighting coefficient for the unfiltered reference pixel value r[x, -1] is set as c1v << s[y]. That is, the weighting coefficient is derived by carrying out a left shift with respect to the reference intensity coefficient c1v according to a distance shift value s[y] that is determined according to a reference distance y.

Fig. 10(b) depicts another formula for deriving the weighting coefficient b[x, y] for the filtered predicted pixel value q[x, y].

Fig. 10(c) depicts a formula for deriving a distance shift value s[x]. The distance shift value s[x] s[x](k[x] = 1 << s[x]), is set to be a difference value which is a difference between smax and a value "floor(x / d)" that monotonically increases according to the reference distance x (the horizontal distance x between the target pixel and the reference region). Here, floor() is a floor function, d is a predefined parameter corresponding to the prediction block size, and "x / d" represents the division of y by d (rounded down to the nearest decimal). A definition for which the horizontal distance x is replaced with the vertical distance y in the definition of the aforementioned distance weighting s[x] can be used also for the distance shift value s[y]. The values of the distance shift values s[x] and s[y] are values that decrease as the reference distance (x or y) increases.

According to the aforementioned method for deriving a predicted pixel value described with reference to Fig. 10, the value of the distance shift value (s[x] or s[y]) becomes a lower value as the distance (x or y) between the target pixel and the reference region increases. The derived weighting coefficient also increases as the distance shift value increases, and therefore, as already described, a predicted pixel value can be derived by correcting a filtered predicted pixel value with the greater weighting for an unfiltered reference pixel value as the position within a prediction block becomes nearer to the reference region.

Hereinafter, the operation of modified example 3 of the predicted image correction unit 145 will be described with reference to Fig. 1 once again. In modified example 3 of the predicted image correction unit 145, the weighting coefficient is derived by means of processing in which (S23) is replaced with the following (S23'). The other processing is as already described and therefore a description thereof is omitted.

(S23') The predicted image correction unit 145 (modified example 3) derives the weighting coefficients below by means of a left shift according to distance shift values derived in step S22 for the reference intensity coefficients derived in step S21.

```
First weighting coefficient w1v = c1v << s[y]


Second weighting coefficient w1h = c1h << s[x]


Third weighting coefficient w2v = c2v << s[y]
```

```
Fourth weighting coefficient w2h = c2h << s[x]
```

Hereinabove, in modified example 3 of the predicted image correction unit 145, the distance weighting k[x] is derived by means of a left shift according to the distance shift value s[x]. A left shift value itself is not only high speed but is also excellent in the sense that a left shift operation can be replaced with an equivalent calculation as multiplication.

[Modified Example 4: Configuration in Which Accuracy of Distance Weighting Is Improved]

A method for calculating the distance weighting k[x] by means of a left shift operation in the predicted image correction unit 145 in the aforementioned embodiment has been described with reference to Fig. 6(c). Here, as in the formula of Fig. 6(c), in a case where the distance weighting k[x] is derived by means of a left shift operation expressed in the form of "k = P << Q", the distance weighting k[x] can be expressed as being derived with a left shift according to a left shift width Q being applied to a term to be shifted P.

In the configuration up to the aforementioned, in Fig. 6(c), the term to be shifted P is "1" and the left shift width Q is "smax - floor(x / d)". In this case, the value that can be taken by the distance weighting k[x] is restricted to a power of 2.

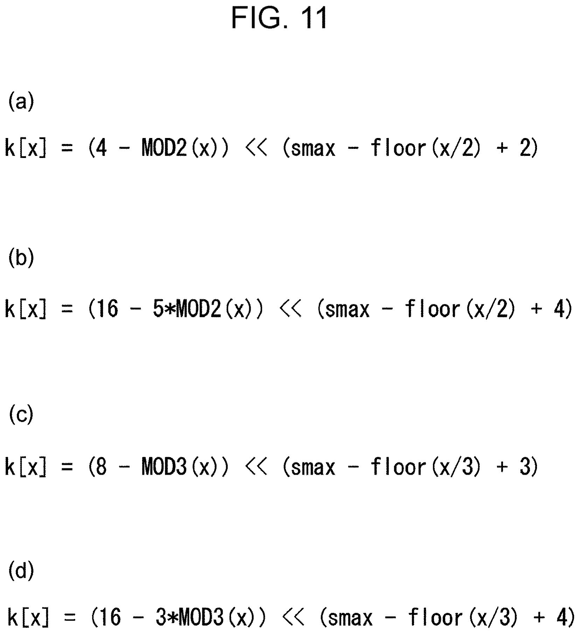

However, the distance weighting k[x] can also be obtained by means of a method in which the distance weighting k[x] is not restricted to a power of 2. A formula for deriving this kind of distance weighting k[x] will be described with reference to Fig. 11.

Figs. 11(a) to (d) depict examples of calculation formulas for deriving the distance weighting k[x] by means of a left shift operation. Figs. 11(a) and (b) are formulas for deriving the distance weighting k[x] used in a case where d = 2, and Figs. 11(c) and (d) are formulas for deriving the distance weighting k[x] used in a case where d = 3. A remainder term MOD2(x) of 2 is used as the formula for deriving the distance weighting k[x] in a case where d = 2, and remainder term MOD3(x) of 3 is used as the formula for deriving the distance weighting k[x] in a case where d = 3. In Fig. 11(a), the term to be shifted P is "4 - MOD2(x)" and the left shift width Q is "smax - floor(x / 2) + 2". Here, "MOD2(x)" is a remainder obtained by dividing x by a divisor 2, and "floor(x / 2)" is a quotient obtained by dividing x by the divisor 2. Fig. 11(a) can be expressed as follows using a predefined divisor a (a = 2 in Fig. 11(a)) and a predefined constant b (b = 2 in Fig. 11(a)). In other words, in Fig. 11(a), the term to be shifted P is "a value obtained by subtracting the remainder (MOD2(x)) produced by the divisor a on the reference distance x from the bth power of 2", and the left shift width Q is "a value obtained by subtracting the quotient (floor(x / 2)) produced by the divisor a on the reference distance x from the first normalization adjustment term (smax) and adding the constant b".

In Fig. 11(b), the term to be shifted P is "16 - 5 * MOD2(x)" and the left shift width Q is "smax - floor(x / 2) + 4". Fig. 11(b) can be expressed as follows using a predefined divisor a (a = 2 in Fig. 11(b)), a predefined constant b (b = 4 in Fig. 11(b)), and a predefined constant c (c = 5 in Fig. 11(b)). In other words, in Fig. 11(b), the term to be shifted P is "a value obtained by subtracting the product of the remainder (MOD2(x)) produced by the divisor a on the reference distance x and the constant c from the bth power of 2", and the left shift width Q is "a value obtained by subtracting the quotient (floor(x / 2)) produced by the divisor a on the reference distance x from the first normalization adjustment term (smax) and adding the constant b".

In Fig. 11(c), the term to be shifted P is "8 - MOD3(x)" and the left shift width Q is "smax - MOD3(x) + 3". Here, "MOD3(x)" is a remainder obtained by dividing x by a divisor 3, and "floor(x / 3)" is a quotient obtained by dividing x by the divisor 3. Fig. 11(c) can be expressed as follows using the predefined divisor a (a = 3 in Fig. 11(c)) and the predefined constant b (b = 3 in Fig. 11(b)). In other words, in Fig. 11(c), the term to be shifted P is "a value obtained by subtracting the remainder (MOD3(x)) produced by the divisor a on the reference distance x from the bth power of 2", and the left shift width Q is "a value obtained by subtracting the quotient (floor(x / 3)) produced by the divisor a on the reference distance x from the first normalization adjustment term (smax) and adding the constant b".

In Fig. 11(d), the term to be shifted P is "16 - 3 * MOD3(x)" and the left shift width Q is "smax - MOD3(x) + 4". Fig. 11(d) can be expressed as follows using the predefined divisor a (a = 3 in Fig. 11(d)), the predefined constant b (b = 4 in Fig. 11(b)), and the predefined constant c (c = 3 in Fig. 11(b)). In other words, in Fig. 11(d), the term to be shifted P is "a value obtained by subtracting the product of the remainder (MOD3(x)) produced by the divisor a on the reference distance x and the constant c from the bth power of 2", and the left shift width Q is "a value obtained by subtracting the quotient (floor(x / 3)) produced by the divisor a on the reference distance x from the first normalization adjustment term (smax) and adding the constant b".

The aforementioned formulas of Fig. 11(a) and Fig. 11(c) can be collectively expressed as follows. A distance weighting can be derived by setting the predetermined divisor a and the predefined constant b, setting the term to be shifted P to "a value obtained by subtracting the remainder produced by the divisor a on the reference distance x from the bth power of 2" and the left shift width Q to "a value obtained by subtracting the quotient produced by the divisor a on the reference distance x from the first normalization adjustment term and adding the constant b", and applying a left shift operation having the left shift width Q to the term to be shifted P.

The aforementioned formulas of Fig. 11(b) and Fig. 11(d) can be collectively expressed as follows. A distance weighting can be derived by setting the predetermined divisor a, the predefined constant b, and the predefined constant c, setting the term to be shifted P to "a value obtained by subtracting the product of the remainder produced by the divisor a on the reference distance x and the constant c from the $b^{th}$ power of 2" and the left shift width Q to "a value obtained by subtracting the quotient produced by the divisor a on the reference distance x from the first normalization adjustment term and adding the constant b", and applying a left shift operation having the left shift width Q to the term to be shifted P. According to the method for calculating the distance weighting k[x] depicted in Fig. 11 as mentioned above, the value of the term to be shifted P can be set based on a remainder that is obtained by dividing the reference distance x by a predefined divisor. Therefore, the term to be shifted P can be set to a value other than 1. Consequently, a value other than a power of 2 can be derived as the value of the distance weighting k[x] and therefore the degree of freedom for setting the distance weighting improves, and it consequently becomes possible to set a distance weighting with which a predicted image having smaller prediction residuals can be derived by means of the predicted image correction processing.

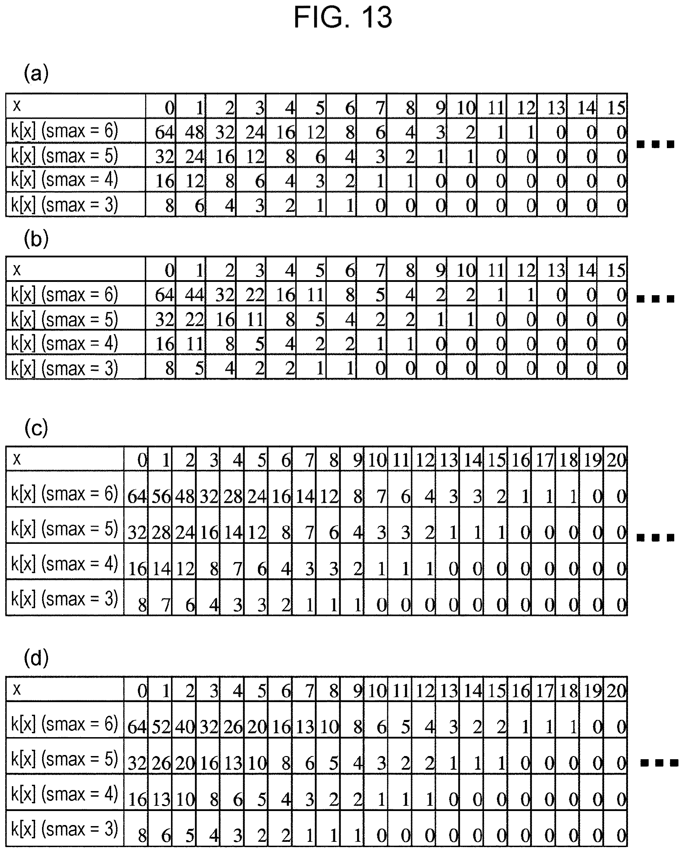

For example, in a case where there is a restriction to values other than a power of 2, it occurs that the distance weighting does not change even if the distance x changes in a case where d is other than 1 as depicted in Fig. 9. For example, in a case where d = 2 and smax = 8, the distance weighting k[x] changes only once every two times as x increases as in 8, 8, 4, 4, 2, 2, 1, 1, and, for example, in a case where d = 3 and smax = 8, the distance weighting k[x] changes only once every three times as in 8, 8, 8, 4, 4, 4, 2, 2, 2, 1, 1, 1. This occurs because floor(x / d) for when the distance weighting k[x] is derived does not continuously change when d > 0 (changes by 1 when x increases by the length d). In this case, not only is the processing of reducing the weighting for unfiltered pixels at boundaries not adapting when the distance increases, but also there remains an artificial pattern (for example, a line) due to the prediction method since the changes become discontinuous, which also becomes a cause for a decline in subjective image quality. According to the method for calculating the distance weighting k[x] depicted in Fig. 11, changes can be made to be continuous by means of the remainder term (Fig. 13) reference. This is a term with which MOD2(x) changes as in 0, 1, 0, 1, 0, 1, 0, 1 as x increases, and 4 - MOD2(x) thereby changes as in 4, 3, 4, 3, 4, 3, 4, 3. From 4 to 3 is a decrease by 3 / 4 = 0.7. In a case where d = 2, when combined with the shift value smax - floor(x / d) changing once every two times (becomes 1/2 once every two times), the weighting changes in a relative manner as in 1, 3/4, 1/2, 3/4 * 1/2, 1/4, ...

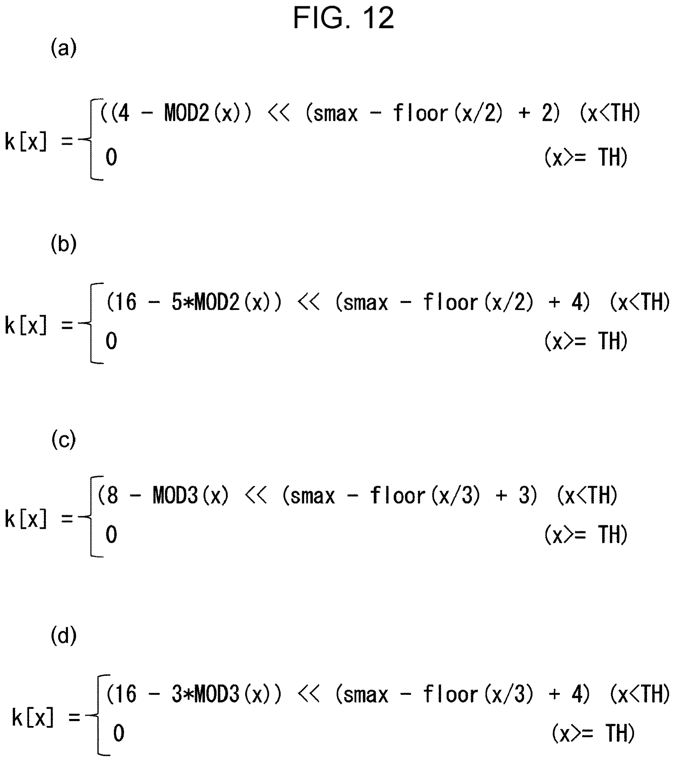

The calculation formula for the distance weighting k[x] described with reference to Fig. 8 as modified example 1 may be combined with the calculation formula for the distance weighting k[x] described with reference to Fig. 11. Calculation formulas for the distance weighting k[x] according to this kind of combination are depicted in Fig. 12. The calculation formulas for the distance weighting k[x] depicted in Fig. 12 have been obtained by correcting the corresponding calculation formulas for the distance weighting k[x] described with reference to Fig. 11, in such a way that 0 is obtained in a case where the reference distance x is equal to or greater than a predetermined value. Fig. 12(a) corresponds to Fig. 11(a), Fig. 12(b) corresponds to Fig. 11(b), Fig. 12(c) corresponds to Fig. 11(c), and Fig. 12(d) corresponds to Fig. 11(d).

Furthermore, in the deriving of the distance weighting k[x], instead of calculating each time on the basis of the calculation formulas of Fig. 12, the distance weighting k[x] may be derived with reference to distance weighting reference tables within a recording region. Examples of distance weighting reference tables are depicted in Fig. 13. The tables depicted in Fig. 13(a) to (d) are tables that retain the results of the distance weighting calculation formulas of Fig. 12(a) to (d).

It should be noted that Fig. 11(a) and Fig. 11(c) are suitable for hardware processing in particular. For example, 4 - MOD2(x) can be processed without using a product with which the implementation scale becomes larger in hardware, and the same is also true for 8 - MOD3(x).

[Modified Example 5: Configuration in Which Correction Processing Is Omitted According to Block Size]

The predicted image correction unit 145 may have a configuration in which the aforementioned predicted image correction processing is executed in a case where the prediction block size satisfies a specific condition, and in other cases a filtered predicted image that has been input is output as a predicted image without any processing. Specifically, there is a configuration in which the predicted image correction processing is omitted in a case where the prediction block size is equal to or less than a predetermined size, and in other cases the predicted image correction processing is executed. For example, in a case where the prediction block size is 4 × 4, 8 × 8, 16 × 16, and 32 × 32, the predicted image correction processing is omitted for 4 × 4 and 8 × 8 prediction blocks, and the predicted image correction processing is executed for 16 × 16 and 32 × 32 prediction blocks. Generally, in a case where small prediction blocks are used, the amount of processing per unit area is large which becomes a processing bottleneck. Consequently, by omitting the predicted image correction processing in comparatively small prediction blocks, the amount of coding for coded data can be reduced by means of the effect of an improvement in the predicted image accuracy brought about by the predicted image correction processing, without causing an increase in processing which becomes a bottleneck.

[Video Image Coding Device]

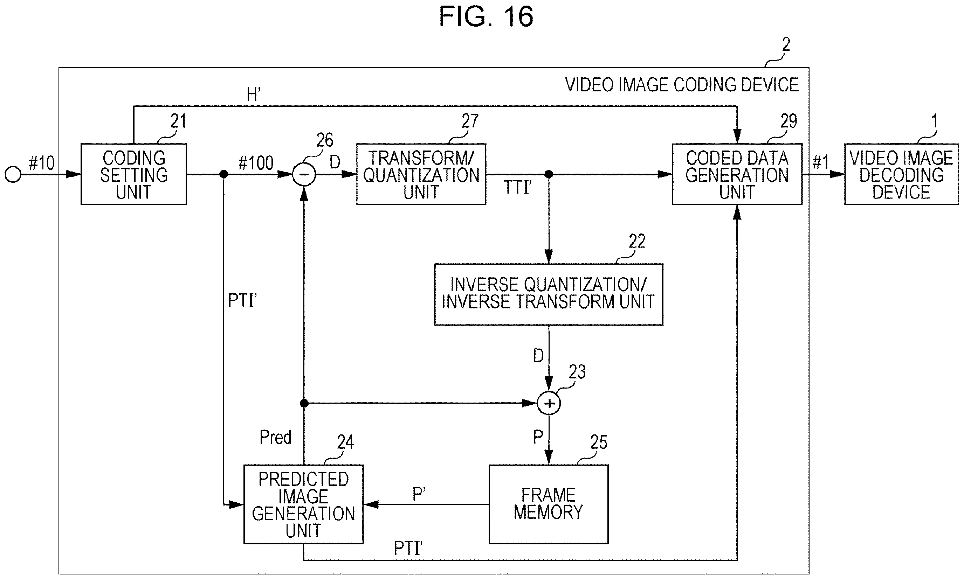

The video image coding device 2 according to the present embodiment will be described with reference to Fig. 16. The video image coding device 2 is a video image coding device that is provided with a predicted image generation unit 24 having an equivalent function to that of the aforementioned predicted image generation unit 14, and codes an input image #10 and generates and outputs the coded data #1, which can be decoded by the aforementioned video image decoding device 1. An example of the configuration of the video image coding device 2 will be described using Fig. 16. Fig. 16 is a functional block diagram depicting the configuration of the video image coding device 2. As depicted in Fig. 16, the video image coding device 2 is provided with a coding setting unit 21, an inverse quantization/inverse transform unit 22, an adder 23, the predicted image generation unit 24, a frame memory 25, a subtracter 26, a transform/quantization unit 27, and a coded data generation unit 29.

The coding setting unit 21 generates image data relating to coding and various types of setting information on the basis of the input image #10. Specifically, the coding setting unit 21 generates the following image data and setting information. First, the coding setting unit 21 sequentially divides the input image #10 into slice units, tree block units, and CU units, and thereby generates a CU image #100 for a target CU.

Furthermore, the coding setting unit 21 generates header information H' on the basis of the result of the division processing. The header information H' includes (1) information regarding the size and shape of a tree block belonging to a target slice and the position within the target slice, and (2) CU information CU' regarding the size and shape of a CU belonging to each tree block and the position within a target tree block.

In addition, the coding setting unit 21 generates PT setting information PTI' with reference to the CU image #100 and the CU information CU'. The PT setting information PTI' includes information regarding combinations of all (1) division patterns that are possible into each PU (prediction block) of a target CU, and (2) prediction modes that can be assigned for each prediction block.

The coding setting unit 21 supplies the CU image #100 to the subtracter 26. Furthermore, the coding setting unit 21 supplies the header information H' to the coded data generation unit 29. Furthermore, the coding setting unit 21 supplies the PT setting information PTI' to the predicted image generation unit 24.

The inverse quantization/inverse transform unit 22 carries out inverse quantization and an inverse orthogonal transform on a quantized prediction residual of each block supplied from the transform/quantization unit 27, and thereby restores a prediction residual of each block. The inverse orthogonal transform has already been described with regard to the inverse quantization/inverse transform unit 13 depicted in Fig. 2, and therefore a description thereof is omitted here.

Furthermore, the inverse quantization/inverse transform unit 22 integrates the prediction residual of each block in accordance with a division pattern designated by TT division information (described later on), and generates a prediction residual D for the target CU. The inverse quantization/inverse transform unit 22 supplies the prediction residual D for the generated target CU to the adder 24.

The predicted image generation unit 24 generates the predicted image Pred for the target CU with reference to the local decoded image P' stored in the frame memory 25 and the PT setting information PTI'. The predicted image generation unit 24 sets prediction parameters obtained by means of predicted image generation processing, in the PT setting information PTI', and transfers the PT setting information PTI' subsequent to the setting, to the coded data generation unit 29. It should be noted that the predicted image generation processing carried out by the predicted image generation unit 24 is similar to that of the predicted image generation unit 14 provided in the video image decoding device 1 and a description thereof is omitted. The predicted image generation unit 24 includes therein the constituent elements of the predicted image generation unit 14 depicted in Fig. 5, and can generate and output a predicted image with the PT information PTI' and the local decoded image P' as input.

The adder 23 generates a decoded image P for the target CU by adding the predicted image Pred supplied from the predicted image generation unit 24 and the prediction residual D supplied from the inverse quantization/inverse transform unit 22.

The frame memory 25 has sequentially recorded therein decoded images P that have been decoded. The frame memory 25 has recorded therein decoded images corresponding to all tree blocks that have been decoded prior to a target tree block (for example, all tree blocks preceding in raster scan order) at the point in time at which the target tree block is decoded.

The subtracter 26 generates the prediction residual D for the target CU by subtracting the predicted image Pred from the CU image #100. The subtracter 26 supplies the generated prediction residual D to the transform/quantization unit 27.

The transform/quantization unit 27 generates a quantized prediction residual by carrying out an orthogonal transform and quantization with respect to the prediction residual D. It should be noted that the orthogonal transform here indicates a transform from the pixel domain to the frequency domain. Furthermore, a DCT transform (discrete cosine transform), a DST transform (discrete sine transform), and the like can be cited as examples of an inverse orthogonal transform.

Specifically, the transform/quantization unit 27 refers to the CU image #100 and the CU information CU', and decides a division pattern into one or more blocks for the target CU. Furthermore, the prediction residual D is divided into prediction residuals for each block in accordance with the decided division pattern.

Furthermore, the transform/quantization unit 27 carries out an orthogonal transform on the prediction residual for each block to thereby generate a prediction residual in the frequency domain, and then quantizes the prediction residual in the frequency domain to thereby generate a quantized prediction residual for each block.

Furthermore, the transform/quantization unit 27 generates TT setting information TTI' that includes the quantized prediction residual for each block generated, the TT division information designating the division pattern for the target CU, and information relating to all possible division patterns into each block of the target CU. The transform/quantization unit 27 supplies the generated TT setting information TTI' to the inverse quantization/inverse transform unit 22 and the coded data generation unit 29.

The coded data generation unit 29 codes the header information H', TT setting information TTI', and PT setting information PTI', and multiplexes the coded header information H, TT setting information TTI, and PT setting information PTI to generate and output the coded data #1.

(Effect of Video Image Coding Device)

The video image coding device in the present embodiment described above is provided with the predicted image generation unit 24 including the predicted image correction unit 145 as a constituent element, and the predicted image generation unit 24 generates a predicted image (corrected predicted image) from unfiltered reference pixel values and filtered predicted pixel values by means of weighted sum based on weighting coefficients, with each pixel of the filtered predicted image being targeted. The aforementioned weighting coefficients are a product of a reference intensity coefficient that is determined according to the prediction direction indicated by the prediction mode, and a distance weighting that monotonically decreases according to an increase in the distance between the target pixel and the reference region. Consequently, the value of the distance weighting (for example, k[x] or k[y]) becomes a lower value as the reference distance (for example, x or y) increases, and, consequently, predicted pixel values having high prediction accuracy can be generated by generating a predicted image with the weighting for unfiltered reference pixel values increasing to a greater extent as the reference distance decreases. In addition, since the weighting coefficient is a product of a reference intensity coefficient and a distance weighting, the weighting coefficient can be derived without using a right shift operation and division, by calculating and retaining the value of distance weightings in a table in advance for each distance.

[Predicted Image Generation Device]

The video image decoding device 1 and the video image coding device 2 are internally provided with the predicted image generation unit 14 depicted in Fig. 5, and coding and decoding processing of video images can thereby be realized with a predicted image having high prediction accuracy being derived with a smaller computational load. However, the predicted image generation unit 14 can also be used for other purposes. For example, the predicted image generation unit 14 can also be used incorporated into an image deficiency restoration device that repairs deficiencies in videos and still images. In such a case, a prediction block corresponds to a region targeted for a deficiency repair, and the input to the predicted image generation unit 14 becomes a prediction mode corresponding to a restoration pattern for an image deficiency, and an input image or a restored image of the prediction block periphery. The output becomes a restored image in the prediction block.

A predicted image generation device can be realized with the same configuration as that of the predicted image generation unit 14, and the predicted image generation device can be used as a constituent element of a video image decoding device, a video image coding device, and an image deficiency restoration device.

[Application Examples]

The aforementioned video image coding device 2 and video image decoding device 1 can be used mounted in various types of devices that carry out the transmission, reception, recording, and playback of video images. It should be noted that a video image may be a natural video image captured by a camera or the like, or may be an artificial video image (including a CG and a GUI) generated by a computer or the like.

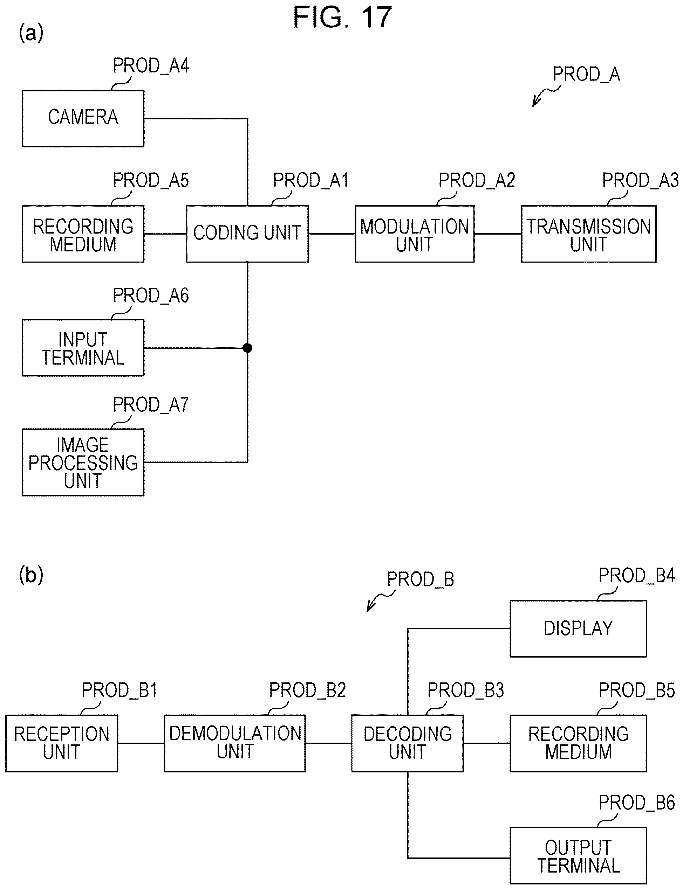

First, it being possible for the aforementioned video image coding device 2 and video image decoding device 1 to be used for the transmission and reception of a video image will be described with reference to Fig. 17.

Fig. 17(a) is a block diagram depicting the configuration of a transmission device PROD_A in which the video image coding device 2 is mounted. As depicted in Fig. 17(a), the transmission device PROD_A is provided with a coding unit PROD_A1 that obtains coded data by coding a video image, a modulation unit PROD_A2 that obtains a modulated signal by modulating a carrier wave by means of the coded data obtained by the coding unit PROD_A1, and a transmission unit PROD_A3 that transmits the modulated signal obtained by the modulation unit PROD_A2. The aforementioned video image coding device 2 is used as this coding unit PROD_A1.

The transmission device PROD_A may be additionally provided with, as a supply source for a video image that is input to the coding unit PROD_A1, a camera PROD_A4 that captures a video image, a recording medium PROD_A5 in which a video image is recorded, an input terminal PROD_A6 for inputting a video image from outside, and an image processing unit A7 that generates or processes an image. In Fig. 17(a), a configuration in which the transmission device PROD_A is provided with all of these is exemplified; however, a portion thereof may be omitted.

It should be noted that the recording medium PROD_A5 may have recorded therein a video image that has not been coded, or may have recorded therein a video image that has been coded according to a coding method for recording that is different from a coding method for transmission. In the case of the latter, a decoding unit (not depicted) that decodes coded data that has been read out from the recording medium PROD_A5, in accordance with the coding method for recording may be arranged between the recording medium PROD_A5 and the coding unit PROD_A1.

Fig. 17(b) is a block diagram depicting the configuration of a reception device PROD_B in which the video image decoding device 1 is mounted. As depicted in Fig. 17(b), the reception device PROD_B is provided with a reception unit PROD_B1 that receives a modulated signal, a demodulation unit PROD_B2 that obtains coded data by demodulating the modulated signal received by the reception unit PROD_B1, and a decoding unit PROD_B3 that obtains a video image by decoding the coded data obtained by the demodulation unit PROD_B2. The aforementioned video image decoding device 1 is used as this decoding unit PROD_B3.

The reception device PROD_B may be additionally provided with, as a supply destination for a video image that is output by the decoding unit PROD_B3, a display PROD_B4 that displays a video image, a recording medium PROD_B5 for recording a video image, and an output terminal PROD_B6 for outputting a video image to outside. In Fig. 17(b), a configuration in which the reception device PROD_B is provided with all of these is exemplified; however, a portion thereof may be omitted.

It should be noted that the recording medium PROD_B5 may be for recording a video image that has not been coded, or for which coding has been carried out according to a coding method for recording that is different from a coding method for transmission. In the case of the latter, a coding unit (not depicted) that codes a video image acquired from the decoding unit PROD_B3, in accordance with the coding method for recording may be arranged between the decoding unit PROD_B3 and the recording medium PROD_B5.

It should be noted that the transmission medium that transmits a modulated signal may be wireless or may be wired. Furthermore, the mode of transmission in which a modulated signal is transmitted may be broadcasting (here, referring to a mode of transmission in which the transmission destination is not specified in advance), or may be communication (here, referring to a mode of transmission in which the transmission destination is specified in advance). In other words, the transmission of a modulated signal may be realized by means of any of wireless broadcasting, wired broadcasting, wireless communication, and wired communication.

For example, a broadcasting station (such as broadcasting equipment) and a receiving station (such as a television receiver) for terrestrial digital broadcasting are an example of the transmission device PROD_A and the reception device PROD_B that transmit and receive a modulated signal by means of wireless broadcasting. Furthermore, a broadcasting station (such as broadcasting equipment) and a receiving station (such as a television receiver) for cable television broadcasting are an example of the transmission device PROD_A and the reception device PROD_B that transmit and receive a modulated signal by means of wired broadcasting.

Furthermore, a server (such as a workstation) for a VOD (video on demand) service, a video sharing service, or the like in which the Internet is used, and a client (a television receiver, a personal computer, a smartphone, or the like) are an example of the transmission device PROD_A and the reception device PROD_B that transmit and receive a modulated signal by means of communication (ordinarily, either of wireless or wired is used as a transmission medium in LAN, and wired is used as a transmission medium in WAN). Here, a personal computer includes a desktop PC, a laptop PC, and a tablet PC. Furthermore, a smartphone also includes a multifunction cellular telephone terminal.

It should be noted that a client of a video sharing service has a function for coding a video image captured by a camera and uploading the video image to a server, in addition to a function for decoding coded data downloaded from a server and displaying the coded data on a display. In other words, a client of a video sharing service functions as both the transmission device PROD_A and the reception device PROD_B.

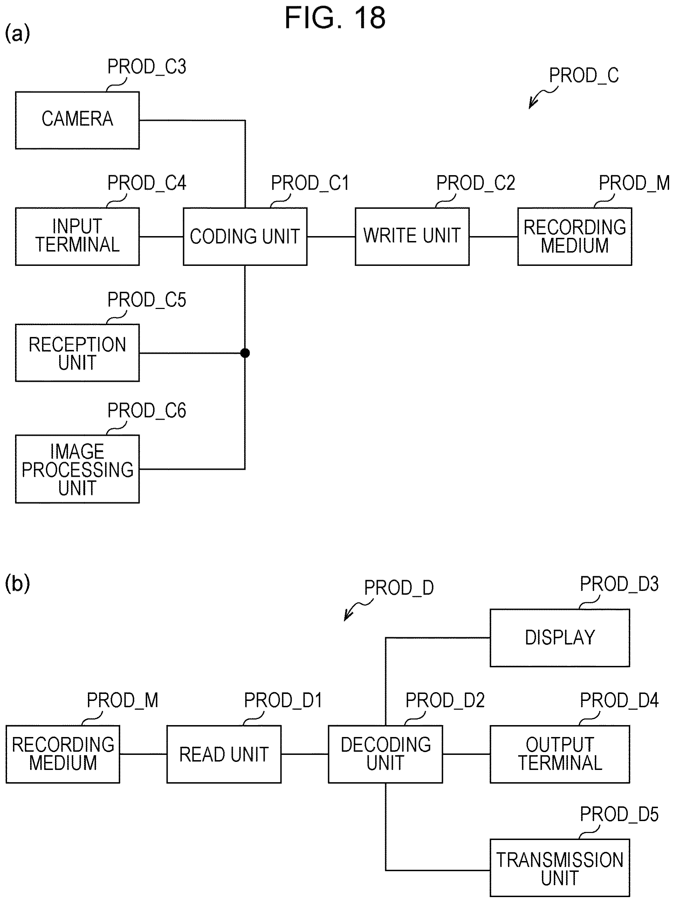

First, it being possible for the aforementioned video image coding device 2 and video image decoding device 1 to be used for the recording and playback of a video image will be described with reference to Fig. 18.

Fig. 18(a) is a block diagram depicting the configuration of a recording device PROD_C in which the aforementioned video image coding device 2 is mounted. As depicted in Fig. 18(a), the recording device PROD_C is provided with a coding unit PROD_C1 that obtains coded data by coding a video image, and a write unit PROD_C2 that writes the coded data obtained by the coding unit PROD_C1 to a recording medium PROD_M. The aforementioned video image coding device 2 is used as this coding unit PROD_C1.

It should be noted that the recording medium PROD_M may be: (1) a type that is housed within the recording device PROD_C, such as an HDD (hard disk drive) or an SSD (solid state drive); (2) a type that is connected to the recording device PROD_C, such as an SD memory card or a USB (universal serial bus) flash memory; or (3) loaded in a drive device (not depicted) that is housed within the recording device PROD_C, such as a DVD (digital versatile disc) or a BD (Blu-ray Disc: registered trademark).

Furthermore, the recording device PROD_C may be additionally provided with, as a supply source for a video image that is input to the coding unit PROD_C1, a camera PROD_C3 that captures a video image, an input terminal PROD_C4 for inputting a video image from outside, a reception unit PROD_C5 for receiving a video image, and an image processing unit C6 that generates or processes an image. In Fig. 18(a), a configuration in which the recording device PROD_C is provided with all of these is exemplified; however, a portion thereof may be omitted.

It should be noted that the reception unit PROD_C5 may receive a video image that has not been coded, or may receive coded data that has been coded according to a coding method for transmission that is different from a coding method for recording. In the case of the latter, a transmission-purpose decoding unit (not depicted) that decodes coded data that has been coded according to the coding method for transmission may be arranged between the reception unit PROD_C5 and the coding unit PROD_C1.

A DVD recorder, a BD recorder, an HD (hard disk) recorder, and the like can be given as examples of this kind of recording device PROD_C (in this case, the input terminal PROD_C4 or the reception unit PROD_C5 becomes the main supply source for a video image). Furthermore, a camcorder (in this case, the camera PROD_C3 becomes the main supply source for a video image), a personal computer (in this case, the reception unit PROD_C5 becomes the main supply source for a video image), a smartphone (in this case, the camera PROD_C3, the reception unit PROD_C5, or the image processing unit C6 becomes the main supply source for a video image), or the like is also an example of this kind of recording device PROD_C.

Fig. 18(b) is a block depicting the configuration of a playback device PROD_D in which the video image decoding device 1 is mounted. As depicted in Fig. 18(b), the playback device PROD_D is provided with a read unit PROD_D1 that reads out coded data written to the recording medium PROD_M, and a decoding unit PROD_D2 that obtains a video image by decoding the coded data read out by the read unit PROD_D1. The aforementioned video image decoding device 1 is used as this decoding unit PROD_D2.

It should be noted that the recording medium PROD_M may be: (1) a type that is housed within the playback device PROD_D, such as an HDD or an SSD; a (2) type that is connected to the playback device PROD_D, such as an SD memory card or a USB flash memory; or (3) loaded in a drive device (not depicted) that is housed within the playback device PROD_D, such as a DVD or a BD.

The playback device PROD_D may be additionally provided with, as a supply destination for a video image that is output by the decoding unit PROD_D2, a display PROD_D3 that displays a video image, an output terminal PROD_D4 for outputting a video image to outside, and a transmission unit PROD_D5 that transmits a video image. In Fig. 18(b), a configuration in which the playback device PROD_D is provided with all of these is exemplified; however, a portion thereof may be omitted.

It should be noted that the transmission unit PROD_D5 may transmit a video image that has not been coded, or may transmit coded data that has been coded according to a coding method for transmission that is different from a coding method for recording. In the case of the latter, a coding unit (not depicted) that codes a video image in accordance with the coding method for transmission may be arranged between the decoding unit PROD_D2 and the transmission unit PROD_D5.

A DVD player, a BD player, an HDD player, and the like can be given as examples of this kind of playback device PROD_D (in this case, the output terminal PROD_D4 having a television receiver or the like connected thereto becomes the main supply destination for a video image). Furthermore, a television receiver (in this case, the display PROD_D3 becomes the main supply destination for a video image), digital signage (also called electronic signboards, electronic bulletin boards, or the like; the display PROD_D3 or the transmission unit PROD_D5 becomes the main supply destination for a video image), a desktop PC (in this case, the output terminal PROD_D4 or the transmission unit PROD_D5 becomes the main supply destination for a video image), a laptop PC or a tablet PC (in this case, the display PROD_D3 or the transmission unit PROD_D5 becomes the main supply destination for a video image), a smartphone (in this case, the display PROD_D3 or the transmission unit PROD_D5 becomes the main supply destination for a video image), or the like is also an example of this kind of playback device PROD_D.

(Hardware-Based Implementation and Software-Based Implementation)

Furthermore, each block of the aforementioned video image decoding device 1 and video image coding device 2 may be realized based on hardware by means of a logic circuit formed on an integrated circuit (IC chip), or may be realized based on software using a CPU (central processing unit).

In the case of the latter, the aforementioned devices are provided with a CPU that executes instructions of a program that realizes each function, a ROM (read only memory) in which the program is stored, a RAM (random access memory) that deploys the program, a storage device (recording medium) such as a memory that stores the program and various types of data, and the like. Also, the purpose of the present invention can also be achieved by a recording medium having program code recorded thereon in a computer-readable manner being supplied to the aforementioned devices, and computers thereof (or CPUs or MPUs) reading out and executing the program code recorded on the recording medium, the program code (an executable format program, an intermediate code program, or a source program) being for a control program for the aforementioned devices and constituting software for realizing the aforementioned functions.

As the aforementioned recording medium, it is possible to use, for example: a tape type such as a magnetic tape or a cassette tape; a disk type including magnetic disks such as a floppy (registered trademark) disk or a hard disk, and optical discs such as a CD-ROM (compact disc read-only memory), an MO disc (magneto-optical disk), an MD (mini disc), a DVD (digital versatile disc), a CD-R (CD recordable), or a Blu-ray disc (registered trademark); a card type such as an IC card (including a memory card) or an optical card; a semiconductor memory type such as a mask ROM, an EPROM (erasable programmable read-only memory), an EEPROM (registered trademark) (electrically erasable and programmable read-only memory), or a flash ROM; a logic circuit type such as a PLD (programmable logic device) or an FPGA (field programmable gate array); or the like.

Furthermore, the aforementioned devices may be configured in a manner that enables connection to a communication network, and the aforementioned program code may be supplied via the communication network. There are no particular restrictions regarding this communication network as long as it is possible for the program code to be transmitted. For example, it is possible to use the Internet, an intranet, an extranet, a LAN (local area network), an ISDN (integrated services digital network), a VAN (value-added network), a CATV (community antenna television/cable television) communication network, a virtual private network, a telephone line network, a mobile communication network, a satellite communication network, or the like. Furthermore, a transmission medium that constitutes this communication network is also not restricted to a specific configuration or type as long as it is a medium that with which it is possible to transmit the program code. For example, it is also possible to use a wired means such as IEEE (Institute of Electrical and Electronic Engineers) 1394, a USB, a power-line carrier, a cable TV line, a telephone line, or an ADSL (asymmetric digital subscriber line), or a wireless means such an infrared including IrDA (Infrared Data Association) or a remote control, Bluetooth (registered trademark), IEEE 802.11 wireless, HDR (high data rate), NFC (near field communication), DLNA (registered trademark) (Digital Living Network Alliance), a cellular telephone network, a satellite line, or a terrestrial digital network. It should be noted that the present invention can also be realized in the form of a computer data signal that is embedded in a carrier wave, in which the aforementioned program code is realized by means of electronic transmission.

The present invention is suitably applicable to an image decoding device that decodes coded data in which image data has been coded, and an image coding device that generates coded data in which image data has been coded, and is also suitably applicable to a data structure for coded data that is generated by an image coding device and is referred to by an image decoding device.

[Summary]

In order to solve the aforementioned problem, a predicted image generation device according to one aspect of the present invention is provided with: a filtered reference pixel setting unit that derives a filtered reference pixel value in a reference region that is set with respect to a prediction block; an intra-prediction unit that derives a filtered predicted pixel value of the prediction block with reference to the filtered reference pixel value in accordance with a prediction method corresponding to a prediction mode; and a predicted image correction unit that generates a predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

Furthermore, in the predicted image generation device, the predicted image correction unit derives the predicted pixel value with a right shift operation being applied with respect to a sum of a product of the unfiltered reference pixel values and the weighting coefficient, a product of the filtered predicted pixel value and the weighting coefficient, and a rounding adjustment term, a width of the right shift operation is a sum of a first normalization adjustment term and a second normalization adjustment term, the distance weighting is a value corresponding to an $N^{th}$ power of 2, and a value of the N is set as a value obtained by subtracting an integer that monotonically increases according to an increase in a distance between the target pixel and the reference region from the first normalization adjustment term.

Furthermore, in the predicted image generation device, the one or more unfiltered reference pixel values include a left unfiltered reference pixel value and an upper unfiltered reference pixel value, the distance weighting for the left unfiltered reference pixel value is a value that monotonically decreases according to an increase in the reference distance, with a distance in a horizontal direction between the target pixel and the reference region serving as the reference distance, and the distance weighting for the upper unfiltered reference pixel value is a value that monotonically decreases according to an increase in the reference distance, with a distance in a vertical direction between the target pixel and the reference region serving as the reference distance.

Furthermore, in the predicted image generation device, the one or more unfiltered reference pixel values include at least two upper-left unfiltered reference pixel values, the distance weighting for a first upper-left unfiltered reference pixel value is a value that monotonically decreases according to an increase in the reference distance, with a distance in a horizontal direction between the target pixel and the reference region serving as the reference distance, and the distance weighting for a second upper-left unfiltered reference pixel value is a value that monotonically decreases according to an increase in the reference distance, with a distance in a vertical direction between the target pixel and the reference region serving as the reference distance.

Furthermore, in the predicted image generation device, a value of 0 is derived as the distance weighting in a case where the reference distance is equal to or greater than a predetermined threshold value.

Furthermore, in the predicted image generation device, the predetermined threshold value is half of a width or a height of the prediction block.

Furthermore, in the predicted image generation device, the distance weighting is derived with reference to a distance weighting derivation table in a storage region, with the reference distance serving as at least one index.

Furthermore, in the predicted image generation device, for the distance weighting, a left shift operation according to a left shift width is applied to a term to be shifted.

Furthermore, in the predicted image generation device, using a predefined divisor a and a predefined constant b, the term to be shifted is set to a value obtained by subtracting a remainder produced by the divisor a on the reference distance from a $b^{th}$ power of 2, and the left shift width is set to a value obtained by subtracting a quotient produced by the divisor a on the reference distance from the first normalization adjustment term and adding the constant b.

Furthermore, in the predicted image generation device, the distance weighting is derived by applying a left shift operation according to a left shift width to a term to be shifted, and, using a predefined divisor a, a predefined constant b, and a predefined constant c, the term to be shifted is set to a value obtained by subtracting a product of a remainder produced by the divisor a on the reference distance and the constant c from a $b^{th}$ power of 2, and the left shift width is set to a value obtained by subtracting a quotient produced by the divisor a on the reference distance from the first normalization adjustment term and adding the constant b.

Furthermore, in the predicted image generation device, the predicted image correction unit generates the predicted image with the predicted image correction processing being executed in a case where a prediction block size satisfies a specific condition, and, in other cases, sets a filtered predicted image that has been input, as the predicted image without being altered.

In order to solve the aforementioned problem, an image decoding device according to one aspect of the present invention is an image decoding device that restores an image from coded data by generating a predicted image with a prediction block serving as a unit in accordance with an intra-prediction method associated with a prediction mode, provided with: a filtered reference pixel setting unit that derives a filtered reference pixel value in a reference region that is set with respect to the prediction block; an intra-prediction unit that derives a filtered predicted pixel value of the prediction block with reference to the filtered reference pixel value in accordance with a prediction method corresponding to the prediction mode; and a predicted image correction unit that generates the predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

In order to solve the aforementioned problem, an image coding device according to one aspect of the present invention is an image coding device that generates coded data from a video image by generating a predicted image with a prediction block serving as a unit in accordance with an intra-prediction method associated with a prediction mode, provided with: a filtered reference pixel setting unit that derives a filtered reference pixel value in a reference region that is set with respect to the prediction block;

an intra-prediction unit that derives a filtered predicted pixel value of the prediction block with reference to the filtered reference pixel value in accordance with a prediction method corresponding to the prediction mode; and a predicted image correction unit that generates the predicted image from the filtered predicted pixel value by means of predicted image correction processing based on an unfiltered reference pixel value in the reference region and the prediction mode, in which the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

(Cross-Reference to Related Application)

The present application claims the benefit of priority from Japanese Patent Application No. 2015-207191 filed on October 21, 2015, the entire contents of which are included herein by reference thereto.

Reference Signs List

1        Video image decoding device (image decoding device)
14, 24    Predicted image generation unit
141      Prediction block setting unit
142      Unfiltered reference pixel setting unit
143      Filtered reference pixel setting unit
144      Intra-prediction unit
144D     DC prediction unit
144P     Planar prediction unit
144H     Horizontal prediction unit
144V     Vertical prediction unit
144A     Angular prediction unit
145      Predicted image correction unit
16, 25    Frame memory
2        Video image coding device (image coding device)

**Claims**

1.  A predicted image generation device comprising:

    a filtered reference pixel setting unit that derives a filtered reference pixel value in a reference region that is set with respect to a prediction block;
    an intra-prediction unit that derives a filtered predicted pixel value of the prediction block with reference to the filtered reference pixel value in accordance with a prediction method corresponding to a prediction mode; and
    a predicted image correction unit that generates a predicted image from the filtered predicted pixel value by carrying out predicted image correction processing on the basis of an unfiltered reference pixel value in the reference region and the prediction mode,
    wherein the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and
    the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

2.  The predicted image generation device according to claim 1,
    wherein the predicted image correction unit derives the predicted pixel value with a right shift operation being applied with respect to a sum of a product of the unfiltered reference pixel values and the weighting coefficient, a product of the filtered predicted pixel value and the weighting coefficient, and a rounding adjustment term,
    a width of the right shift operation is a sum of a first normalization adjustment term and a second normalization adjustment term, and

the distance weighting is a value corresponding to an $N^{th}$ power of 2, and a value of the N is set as a value obtained by subtracting an integer that monotonically increases according to an increase in a distance between the target pixel and the reference region from the first normalization adjustment term.

**3.** The predicted image generation device according to claim 2,

wherein the one or more unfiltered reference pixel values include a left unfiltered reference pixel value and an upper unfiltered reference pixel value,

the distance weighting for the left unfiltered reference pixel value is a value that monotonically decreases according to an increase in the reference distance, with a distance in a horizontal direction between the target pixel and the reference region serving as the reference distance, and

the distance weighting for the upper unfiltered reference pixel value is a value that monotonically decreases according to an increase in the reference distance, with a distance in a vertical direction between the target pixel and the reference region serving as the reference distance.

**4.** The predicted image generation device according to claim 2 or claim 3,

wherein the one or more unfiltered reference pixel values include at least two upper-left unfiltered reference pixel values,

the distance weighting for a first upper-left unfiltered reference pixel value is a value that monotonically decreases according to an increase in the reference distance, with a distance in a horizontal direction between the target pixel and the reference region serving as the reference distance, and

the distance weighting for a second upper-left unfiltered reference pixel value is a value that monotonically decreases according to an increase in the reference distance, with a distance in a vertical direction between the target pixel and the reference region serving as the reference distance.

**5.** The predicted image generation device according to any of claim 1 to claim 4,

wherein a value of 0 is derived as the distance weighting in a case where the reference distance is equal to or greater than a predetermined threshold value.

**6.** The predicted image generation device according to claim 5,

wherein the predetermined threshold value is half of a width or a height of the prediction block.

**7.** The predicted image generation device according to any of claim 1 to claim 6,

wherein the distance weighting is derived with reference to a distance weighting derivation table in a storage region, with the reference distance serving as at least one index.

**8.** The predicted image generation device according to claim 2 to claim 4,

wherein the distance weighting is derived by applying a left shift operation according to a left shift width to a term to be shifted, and,

using a predefined divisor a and a predefined constant b, the term to be shifted is set to a value obtained by subtracting a remainder produced by the divisor a on the reference distance from a $b^{th}$ power of 2, and the left shift width is set to a value obtained by subtracting a quotient produced by the divisor a on the reference distance from the first normalization adjustment term and adding the constant b.

**9.** The predicted image generation device according to any of claim 2 to claim 4, wherein the distance weighting is derived by applying a left shift operation according to a left shift width to a term to be shifted, and,

using a predefined divisor a, a predefined constant b, and a predefined constant c, the term to be shifted is set to a value obtained by subtracting a product of a remainder produced by the divisor a on the reference distance and the constant c from a $b^{th}$ power of 2, and the left shift width is set to a value obtained by subtracting a quotient produced by the divisor a on the reference distance from the first normalization adjustment term and adding the constant b.

**10.** The predicted image generation device according to any of claim 1 to claim 9,

wherein the predicted image correction unit generates the predicted image with the predicted image correction processing being executed in a case where a prediction block size satisfies a specific condition, and, in other cases, sets a filtered predicted image that has been input, as the predicted image without any processing.

**11.** A video image decoding device, in an image decoding device that restores an image from coded data by generating a predicted image with a prediction block serving as a unit in accordance with an intra-prediction method associated with a prediction mode, comprising:

a filtered reference pixel setting unit that derives a filtered reference pixel value in a reference region that is set with respect to the prediction block;

an intra-prediction unit that derives a filtered predicted pixel value of the prediction block with reference to the filtered reference pixel value in accordance with a prediction method corresponding to the prediction mode; and

a predicted image correction unit that generates the predicted image from the filtered predicted pixel value by carrying out predicted image correction processing on the basis of an unfiltered reference pixel value in the reference region and the prediction mode,

wherein the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and

the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

12. A video image coding device, in an image coding device that generates coded data from a video image by generating a predicted image with a prediction block serving as a unit in accordance with an intra-prediction method associated with a prediction mode, comprising:

a filtered reference pixel setting unit that derives a filtered reference pixel value in a reference region that is set with respect to the prediction block;

an intra-prediction unit that derives a filtered predicted pixel value of the prediction block with reference to the filtered reference pixel value in accordance with a prediction method corresponding to the prediction mode; and

a predicted image correction unit that generates the predicted image from the filtered predicted pixel value by carrying out predicted image correction processing on the basis of an unfiltered reference pixel value in the reference region and the prediction mode,

wherein the predicted image correction unit derives a predicted pixel value constituting the predicted image by applying weighted sum in which a weighting coefficient is used with respect to the filtered predicted pixel value in a target pixel within the prediction block, and at least one or more unfiltered reference pixel values, and

the weighting coefficient for the unfiltered reference pixel values is a product of a reference intensity coefficient that is determined according to a prediction direction indicated by the prediction mode, and a distance weighting that monotonically decreases according to an increase in a reference distance for the target pixel.

# FIG. 1

```
PREDICTED PIXEL VALUE
CORRECTION PROCESSING
START
```

SET REFERENCE INTENSITY COEFFICIENT
ACCORDING TO PREDICTION DIRECTION ⟩S21

CALCULATE DISTANCE WEIGHTING k ACCORDING
TO DISTANCE BETWEEN TARGET PIXEL
AND REFERENCE REGION ⟩S22

SET PRODUCT OF REFERENCE INTENSITY
COEFFICIENT AND DISTANCE WEIGHTING
AS WEIGHTING COEFFICIENT ⟩S23

CALCULATE PRODUCT OF WEIGHTING COEFFICIENT
AND UNFILTERED REFERENCE PIXEL VALUE ⟩S24

CALCULATE WEIGHTING COEFFICIENT b[x, y] ⟩S25

CALCULATE PRODUCT OF FILTERED PREDICTED
PIXEL VALUE AND WEIGHTING COEFFICIENT b[x, y] ⟩S26

ADD PRODUCT OF S24 AND PRODUCT OF S26 ⟩S27

NORMALIZE ADDED VALUE OF S27
BY MEANS OF RIGHT SHIFT OPERATION ⟩S28

```
END
```

# FIG. 2

VIDEO IMAGE DECODING DEVICE

VIDEO IMAGE CODING DEVICE → #1 → VARIABLE LENGTH DECODING UNIT (11) → TTI → INVERSE QUANTIZATION/ INVERSE TRANSFORM UNIT (13) → D → (+) (15) → P → #2

Pred

PTI → PREDICTED IMAGE GENERATION UNIT (14)

P' → FRAME MEMORY (16) → P

EP 3 367 688 A1

# FIG. 3

(a)

PICT

| PH | $S_1$ | $S_2$ | . . . . . . . | $S_{NS}$ |
|----|-------|-------|---------------|----------|

(b)

S

| SH | $TBLK_1$ | $TBLK_2$ | . . . . . . . | $TBLK_{NC}$ |
|----|----------|----------|---------------|-------------|

(c)

TBLK

| TBLKH | | | $CU_1$ | $CU_2$ | . . . . | $CU_{NL}$ |
|-------|---|---|--------|--------|---------|-----------|
| SP_TBLK | $\Delta qp$ | . . . | | | | |

(d)

CU

| SKIP | PTI | | TTI | | | |
|------|-----|---|-----|---|---|---|
| | PType | PInfo | SP_TU | $TUI_1$ | . . . | $TUI_{NT}$ |

# FIG. 4

# FIG. 5

14

PREDICTED IMAGE GENERATION UNIT

PTI

PT INFORMATION PREDICTION MODE

144

INTRA-PREDICTION UNIT

144D
DC PREDICTION UNIT

144P
Planar PREDICTION UNIT

144H
HORIZONTAL PREDICTION UNIT

144V
VERTICAL PREDICTION UNIT

144A
Angular PREDICTION UNIT

141
PREDICTION BLOCK SETTING UNIT

143
FILTERED REFERENCE PIXEL SETTING UNIT

145
PREDICTED IMAGE CORRECTION UNIT

PREDICTED IMAGE

142
UNFILTERED REFERENCE PIXEL SETTING UNIT

P'

16
FRAME MEMORY

# FIG. 6

(a)

```
p[x, y] = {  ( c1v * k[y] ) * r[ x, -1]
           - ( c2v * k[y] ) * r[-1, -1]
           + ( c1h * k[x] ) * r[-1,  y]
           - ( c2h * k[x] ) * r[-1, -1]
           + b[x, y] * q[x, y]
           + (1 << (smax + rshift - 1))
         } >> (smax + rshift)
```

(b)

```
b[x, y] = (1<<(smax + rshift))
        - ( c1v * k[y] )
        + ( c2v * k[y] )
        - ( c1h * k[x] )
        + ( c2h * k[x] )
```

(c)

```
k[x] = 1 << (smax - floor(x/d))

k[y] = 1 << (smax - floor(y/d))
```

# FIG. 7

```
┌─────────────────────────────┐
│      PREDICTED IMAGE         │
│  GENERATION PROCESSING       │
│         START                │
└─────────────────────────────┘
              │
              ▼
┌─────────────────────────────┐  S11
│   SET TARGET PREDICTION UNIT │
└─────────────────────────────┘
              │
              ▼
┌─────────────────────────────┐  S12
│ SET UNFILTERED REFERENCE PIXEL VALUE │
└─────────────────────────────┘
              │
              ▼
┌─────────────────────────────┐  S13
│  SET FILTERED REFERENCE PIXEL PAIR │
└─────────────────────────────┘
              │
              ▼
┌─────────────────────────────┐  S14
│    GENERATE PREDICTED IMAGE  │
└─────────────────────────────┘
              │
              ▼
┌─────────────────────────────┐  S15
│    CORRECT PREDICTED IMAGE   │
└─────────────────────────────┘
              │
              ▼
         S16
    ◇ ALL PUs FINISHED? ◇
   NO              YES
              │
              ▼
         ┌────────┐
         │  END   │
         └────────┘
```

# FIG. 8

$$k[x] = \begin{cases} 1 \ll (\mathrm{smax} - \mathrm{floor}(x/d)) & (x < TH) \\ 0 & (x \geq TH) \end{cases}$$

# FIG. 9

(a)                    d = 1

| x | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| k[x] (smax = 6) | 64 | 32 | 16 | 8 | 4 | 2 | 1 | 0 | 0 | 0 | 0 | 0 | 0 | 0 | 0 | 0 |
| k[x] (smax = 5) | 32 | 16 | 8 | 4 | 2 | 1 | 0 | 0 | 0 | 0 | 0 | 0 | 0 | 0 | 0 | 0 |
| k[x] (smax = 4) | 16 | 8 | 4 | 2 | 1 | 0 | 0 | 0 | 0 | 0 | 0 | 0 | 0 | 0 | 0 | 0 |
| k[x] (smax = 3) | 8 | 4 | 2 | 1 | 0 | 0 | 0 | 0 | 0 | 0 | 0 | 0 | 0 | 0 | 0 | 0 |

...

(b)                    d = 2

| x | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| k[x] (smax = 6) | 64 | 64 | 32 | 32 | 16 | 16 | 8 | 8 | 4 | 4 | 2 | 2 | 1 | 1 | 0 | 0 |
| k[x] (smax = 5) | 32 | 32 | 16 | 16 | 8 | 8 | 4 | 4 | 2 | 2 | 1 | 1 | 0 | 0 | 0 | 0 |
| k[x] (smax = 4) | 16 | 16 | 8 | 8 | 4 | 4 | 2 | 2 | 1 | 1 | 0 | 0 | 0 | 0 | 0 | 0 |
| k[x] (smax = 3) | 8 | 8 | 4 | 4 | 2 | 2 | 1 | 1 | 0 | 0 | 0 | 0 | 0 | 0 | 0 | 0 |

...

(c)                    d = 3

| x | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|----|----|----|----|----|----|----|----|----|----|----|----|----|----|
| k[x] (smax = 6) | 64 | 64 | 64 | 32 | 32 | 32 | 16 | 16 | 16 | 8 | 8 | 8 | 4 | 4 | 4 | 2 | 2 | 2 | 1 | 1 | 1 | 0 | 0 | 0 |
| k[x] (smax = 5) | 32 | 32 | 32 | 16 | 16 | 16 | 8 | 8 | 8 | 4 | 4 | 4 | 2 | 2 | 2 | 1 | 1 | 1 | 0 | 0 | 0 | 0 | 0 | 0 |
| k[x] (smax = 4) | 16 | 16 | 16 | 8 | 8 | 8 | 4 | 4 | 4 | 2 | 2 | 2 | 1 | 1 | 1 | 0 | 0 | 0 | 0 | 0 | 0 | 0 | 0 | 0 |
| k[x] (smax = 3) | 8 | 8 | 8 | 4 | 4 | 4 | 2 | 2 | 2 | 1 | 1 | 1 | 0 | 0 | 0 | 0 | 0 | 0 | 0 | 0 | 0 | 0 | 0 | 0 |

# FIG. 10

(a)

$$p[x,y] = \{ \ ( c1v \ll s[y] \ ) * r[ \ x,-1]$$
$$- ( c2v \ll s[y] \ ) * r[-1,-1]$$
$$+ ( c1h \ll s[x] \ ) * r[-1, y]$$
$$- ( c2h \ll s[x] \ ) * r[-1,-1]$$
$$+ b[x,y] * q[x,y]$$
$$+ (1 \ll (smax + rshift - 1))$$
$$\} \gg (smax + rshift)$$

(b)

$$b[x,y] = (1 \ll (smax + rshift))$$
$$- ( c1v \ll s[y] \ )$$
$$+ ( c2v \ll s[y] \ )$$
$$- ( c1h \ll s[x] \ )$$
$$+ ( c2h \ll s[x] \ )$$

(c)

$$s[x] = (smax - floor(x/d))$$

$$s[y] = (smax - floor(y/d))$$

# FIG. 11

(a)

k[x] = (4 - MOD2(x)) << (smax - floor(x/2) + 2)

(b)

k[x] = (16 - 5*MOD2(x)) << (smax - floor(x/2) + 4)

(c)

k[x] = (8 - MOD3(x)) << (smax - floor(x/3) + 3)

(d)

k[x] = (16 - 3*MOD3(x)) << (smax - floor(x/3) + 4)

# FIG. 12

(a)

$$k[x] = \begin{cases} ((4 - MOD2(x)) << (smax - floor(x/2) + 2) & (x<TH) \\ 0 & (x>= TH) \end{cases}$$

(b)

$$k[x] = \begin{cases} (16 - 5*MOD2(x)) << (smax - floor(x/2) + 4) & (x<TH) \\ 0 & (x>= TH) \end{cases}$$

(c)

$$k[x] = \begin{cases} (8 - MOD3(x) << (smax - floor(x/3) + 3) & (x<TH) \\ 0 & (x>= TH) \end{cases}$$

(d)

$$k[x] = \begin{cases} (16 - 3*MOD3(x)) << (smax - floor(x/3) + 4) & (x<TH) \\ 0 & (x>= TH) \end{cases}$$

# FIG. 13

(a)

| x | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| k[x] (smax = 6) | 64 | 48 | 32 | 24 | 16 | 12 | 8 | 6 | 4 | 3 | 2 | 1 | 1 | 0 | 0 | 0 |
| k[x] (smax = 5) | 32 | 24 | 16 | 12 | 8 | 6 | 4 | 3 | 2 | 1 | 1 | 0 | 0 | 0 | 0 | 0 |
| k[x] (smax = 4) | 16 | 12 | 8 | 6 | 4 | 3 | 2 | 1 | 1 | 0 | 0 | 0 | 0 | 0 | 0 | 0 |
| k[x] (smax = 3) | 8 | 6 | 4 | 3 | 2 | 1 | 1 | 0 | 0 | 0 | 0 | 0 | 0 | 0 | 0 | 0 |

• • •

(b)

| x | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| k[x] (smax = 6) | 64 | 44 | 32 | 22 | 16 | 11 | 8 | 5 | 4 | 2 | 2 | 1 | 1 | 0 | 0 | 0 |
| k[x] (smax = 5) | 32 | 22 | 16 | 11 | 8 | 5 | 4 | 2 | 2 | 1 | 1 | 0 | 0 | 0 | 0 | 0 |
| k[x] (smax = 4) | 16 | 11 | 8 | 5 | 4 | 2 | 2 | 1 | 1 | 0 | 0 | 0 | 0 | 0 | 0 | 0 |
| k[x] (smax = 3) | 8 | 5 | 4 | 2 | 2 | 1 | 1 | 0 | 0 | 0 | 0 | 0 | 0 | 0 | 0 | 0 |

• • •

(c)

| x | 0 | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|----|----|----|----|----|----|----|----|----|----|----|
| k[x] (smax = 6) | 64 | 56 | 48 | 32 | 28 | 24 | 16 | 14 | 12 | 8 | 7 | 6 | 4 | 3 | 3 | 2 | 1 | 1 | 1 | 0 | 0 |
| k[x] (smax = 5) | 32 | 28 | 24 | 16 | 14 | 12 | 8 | 7 | 6 | 4 | 3 | 3 | 2 | 1 | 1 | 1 | 0 | 0 | 0 | 0 | 0 |
| k[x] (smax = 4) | 16 | 14 | 12 | 8 | 7 | 6 | 4 | 3 | 3 | 2 | 1 | 1 | 1 | 0 | 0 | 0 | 0 | 0 | 0 | 0 | 0 |
| k[x] (smax = 3) | 8 | 7 | 6 | 4 | 3 | 3 | 2 | 1 | 1 | 1 | 0 | 0 | 0 | 0 | 0 | 0 | 0 | 0 | 0 | 0 | 0 |

• • •

(d)

| x | 0 | 1 | 2 | 3 | 4 | 5 | 6 | 7 | 8 | 9 | 10 | 11 | 12 | 13 | 14 | 15 | 16 | 17 | 18 | 19 | 20 |
|---|---|---|---|---|---|---|---|---|---|---|----|----|----|----|----|----|----|----|----|----|----|
| k[x] (smax = 6) | 64 | 52 | 40 | 32 | 26 | 20 | 16 | 13 | 10 | 8 | 6 | 5 | 4 | 3 | 2 | 2 | 1 | 1 | 1 | 0 | 0 |
| k[x] (smax = 5) | 32 | 26 | 20 | 16 | 13 | 10 | 8 | 6 | 5 | 4 | 3 | 2 | 2 | 1 | 1 | 1 | 0 | 0 | 0 | 0 | 0 |
| k[x] (smax = 4) | 16 | 13 | 10 | 8 | 6 | 5 | 4 | 3 | 2 | 2 | 1 | 1 | 1 | 0 | 0 | 0 | 0 | 0 | 0 | 0 | 0 |
| k[x] (smax = 3) | 8 | 6 | 5 | 4 | 3 | 2 | 2 | 1 | 1 | 1 | 0 | 0 | 0 | 0 | 0 | 0 | 0 | 0 | 0 | 0 | 0 |

• • •

# FIG. 14

(a)

UNFILTERED REFERENCE PIXEL r[x, −1]

UNFILTERED REFERENCE PIXEL r[−1, −1]

PREDICTED PIXEL p[x, y]

UNFILTERED REFERENCE PIXEL r[−1, y]

(b)

FILTERED REFERENCE PIXEL s[x, −1]

FILTERED REFERENCE PIXEL s[−1, −1]

FILTERED PREDICTED PIXEL q[x, y]

FILTERED REFERENCE PIXEL s[−1, y]

# FIG. 15

(a)

$$
\begin{aligned}
p[x,y] = \\
\{ \ (c1v \gg floor(y/d)) \ * \ r[x,-1] \\
- \ (c2v \gg floor(y/d)) \ * \ r[-1,-1] \\
+ \ (c1h \gg floor(x/d)) \ * \ r[-1,y] \\
- \ (c2h \gg floor(x/d)) \ * \ r[-1,-1] \\
+ \ b[x,y] \ * \ q[x,y] \ + \ 64\} \ \gg \ 7
\end{aligned}
$$

(b)

$$
\begin{aligned}
b[x,y] = \\
128 - (c1v \gg floor(y/d)) \\
+ \ (c2v \gg floor(y/d)) \\
- \ (c1h \gg floor(x/d)) \\
+ \ (c2h \gg floor(x/d))
\end{aligned}
$$

FIG. 16

# FIG. 17

(a)

PROD_A4

CAMERA

PROD_A5

RECORDING
MEDIUM

PROD_A6

INPUT
TERMINAL

PROD_A7

IMAGE
PROCESSING
UNIT

PROD_A1

CODING UNIT

PROD_A2

MODULATION
UNIT

PROD_A3

TRANSMISSION
UNIT

PROD_A

(b)

PROD_B

PROD_B4

DISPLAY

PROD_B1

RECEPTION
UNIT

PROD_B2

DEMODULATION
UNIT

PROD_B3

DECODING
UNIT

PROD_B5

RECORDING
MEDIUM

PROD_B6

OUTPUT
TERMINAL

# FIG. 18

(a)

PROD_C3

| CAMERA |

PROD_C

PROD_C4                    PROD_C1                    PROD_C2                    PROD_M

| INPUT TERMINAL | —— | CODING UNIT | —— | WRITE UNIT | —— | RECORDING MEDIUM |

PROD_C5

| RECEPTION UNIT |

PROD_C6

| IMAGE PROCESSING UNIT |

(b)

PROD_D                                    PROD_D3

| DISPLAY |

PROD_M                    PROD_D1                    PROD_D2                    PROD_D4

| RECORDING MEDIUM | —— | READ UNIT | —— | DECODING UNIT | —— | OUTPUT TERMINAL |

PROD_D5

| TRANSMISSION UNIT |

## INTERNATIONAL SEARCH REPORT

International application No.

PCT/JP2016/074695

**A. CLASSIFICATION OF SUBJECT MATTER**

*H04N19/593(2014.01)i, H04N19/105(2014.01)i, H04N19/167(2014.01)i, H04N19/182(2014.01)i*

According to International Patent Classification (IPC) or to both national classification and IPC

**B. FIELDS SEARCHED**

Minimum documentation searched (classification system followed by classification symbols)

H04N19/00-19/98

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,A | SAID, Amir et al., "Position dependent prediction combination for intra-frame video coding", 2016 IEEE International Conference on Image Processing (ICIP), 19 August 2016, pp.534 -538 | 1-12 |
| A | YU, Shengsheng et al., "Distance-based weighted prediction for H.264 intra coding", International Conference on Audio, Language and Image Processing, 2008. ICALIP 2008, 7 July 2008, pp.1477-1480 | 1-12 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 October 2016 (20.10.16) | 01 November 2016 (01.11.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

| International application No. |
| --- |
| PCT/JP2016/074695 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2014/050971 A1  (Nippon Telegraph and Telephone Corp.), 03 April 2014 (03.04.2014), entire text; all drawings & US 2015/0245021 A1    & EP 2890130 A1 & KR 10-2015-0042268 A  & CN 104838650 A | 1-12 |
| A | JP 2013-502807 A  (Samsung Electronics Co., Ltd.), 24 January 2013 (24.01.2013), entire text; all drawings & US 2011/0038414 A1     & WO 2011/021838 A2 & KR 10-2011-0018188 A  & CN 102484704 A | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015207191 A

**Non-patent literature cited in the description**

- *ITU-T Rec. H.265 (V2),* 29 October 2014

- Position dependent prediction combination. *ITU-T STUDY GROUP 16 COM16-C1046-E,* September 2015